# EUROPEAN PATENT SPECIFICATION

(11) **EP 3 901 493 B1**
(45) Date of publication and mention of the grant of the patent: **28.12.2022**
(21) Application number: 20752825.8
(22) Date of filing: 06.02.2020
(51) Int. Cl.: F16H 59/18, F16H 59/36, F16H 59/48, F16H 59/50, F16H 61/08, F16H 61/16, F16H 61/682, F16H 61/10, F16H 59/44, F16H 61/02

(54) **LEANING VEHICLE**
SCHRÄGLAGEN-FAHRZEUG
VÉHICULE À INCLINAISON

(30) Priority: 06.02.2019 JP 2019019426
(43) Date of publication of application: 27.10.2021
(73) Proprietor: Yamaha Hatsudoki Kabushiki Kaisha, Iwata-shi, Shizuoka 438-8501 (JP)
(72) Inventor: OHATA Shinobu, Iwata-shi, Shizuoka 438-8501 (JP)
(74) Representative: Stöckeler, Ferdinand
(86) International application number: PCT/JP2020/004672
(87) International publication number: WO 2020/162568

(56) References cited:
- JP-A- 2007 218 269
- JP-A- 2012 197 809
- JP-A- 2016 183 757
- JP-U- S61 154 126
- JP-U- S61 154 126
- US-A1- 2012 239 264

## Description

### TECHNICAL FIELD

The present invention relates to a leaning vehicle that leans leftward when turning to the left and leans rightward when turning to the right.

### BACKGROUND ART

A known gear-shift controller of a motorcycle controls a gear-shift of the gear-shift controller. As such a gear-shift controller, for example, Patent Document 1 (Japanese Patent Application Publication No. 2016-183757) discloses a gear-shift controller of a motorcycle as a technology that prevents erroneous determination of an ECU during a failure of a brake detection device and controls an automatic transmission in accordance with a driver's intention.

Specifically, the gear-shift controller disclosed in Patent Document 1 includes a climbing-angle-update-determination device, a gradient estimation device, a deceleration determination device, and a climbing-angle-estimation device. When an accelerator opening degree is a threshold TH or less, the deceleration determination device determines that a vehicle is in a deceleration state. In a case where the gradient estimation device estimates an upslope and the deceleration determination device determines a deceleration state, the climbing-angle-update-determination device inhibits update of an estimated climbing angle obtained by the climbing-angle-estimation device in an increasing direction.

Furthermore, the gear-shift controller disclosed in Patent Document 1 is configured such that the gradient estimation device determines an upslope, based on acceleration of the vehicle in accordance with an acceleration operation amount, and thereafter, when the vehicle further accelerates, the gear-shift controller executes climbing control of changing a shift ratio, based on the climbing angle, so as to cause a shift-down of an automatic transmission to be executed sooner than when traveling on the flat ground.

US 2012/239264 A1 discloses a speed change controlling apparatus in which the mode of driving force transmission is depends upon the roll angle of a vehicle body.

JP S61 154126 U discloses performing gear shift control in accordance with a steering angle generated by a handle operation of a driver.

### CITATION LIST

### PATENT DOCUMENT

Patent Document 1: JP 2016 183575 A

### SUMMARY OF INVENTION

### PROBLEMS TO BE SOLVED BY INVENTION

The gear-shift controller disclosed in Patent Document 1 described above changes gear-shift control depending on whether the vehicle is traveling on the flat ground or is climbing.

Incidentally, it is desired to reduce a posture change of the leaning vehicle caused by gear-shift while a leaning vehicle is turning in a lean state. That is, it is desired to perform gear-shift control such that a posture change of the vehicle does not occur, while a leaning vehicle is turning in a lean state.

It is an object of the present invention to provide a leaning vehicle capable of reducing a posture change of the leaning vehicle caused by a gear-shift while the leaning vehicle turns in a lean state.

### SOLUTION TO PROBLEM

The present inventor performed studies on a leaning vehicle capable of reducing a posture change of the leaning vehicle caused by a gear-shift when the leaning vehicle turns in a lean state.

Through an intensive study, the inventor of the present invention has reached the following configuration.

A leaning vehicle according to one embodiment of the present invention is a leaning vehicle that leans leftward when turning to the left and leans rightward when turning to the right. The leaning vehicle includes a vehicle body, a plurality of wheels including a front wheel and a rear wheel, a driving source configured to supply a driving force to at least one of the front wheel or the rear wheel, an accelerator opening degree adjuster configured to adjust the driving force generated in the driving source in accordance with an accelerator opening degree, a speed detector configured to detect vehicle speed of the vehicle, a gear-type multi-stage automatic transmission including a plurality of gear stages and, a clutch and configured to change the driving force transferred to at least one of the front wheel or the rear wheel from the driving source by automatically changing the plurality of gear stages stepwise, and a gear-shift controller configured to control changing of the plurality of gear stages in the multi-stage automatic transmission, based on a value related to the accelerator opening degree and the vehicle speed. The gear-shift controller shifts up the gear stages of the multi-stage automatic transmission from the first gear stage to the second gear stage, in a case where the leaning vehicle turns in a lean state, in which the leaning vehicle leans with respect to a vertical line of a road surface in a left direction or in a right direction about a rotation axis extending in a front-rear direction of the leaning vehicle as a center, when the vehicle speed at a time when the value related to the accelerator opening degree is a predetermined value exceeds a second vehicle speed threshold that is larger than a first vehicle speed threshold at which the gear stages of the multi-stage automatic transmission are shifted up from a first gear stage to a second gear stage in upright traveling of the leaning vehicle, or shifts up the gear stages of the multi-stage automatic transmission from the first gear stage to the second gear stage, in a case where the leaning vehicle turns in the aforementioned lean state, when the value related to the accelerator opening degree at a time when the vehicle speed is a predetermined vehicle speed exceeds a second accelerator opening degree related threshold that is smaller than a first accelerator opening degree related threshold at which the gear stages of the multi-stage automatic transmission are shifted up from the first gear stage to the second gear stage in upright traveling of the leaning vehicle.

In a case where a shift-up of the plurality of gear stages in the multi-stage automatic transmission of the leaning vehicle is performed, there is a probability that the driving force of the leaning vehicle is reduced. In a case where the leaning vehicle is turning in the lean state, a rolling resistance of the wheels to the ground is large, as compared to the rolling resistance in upright traveling of the leaning vehicle. As described above, the driving force is reduced by a shift-up of the plurality of gear stages in a state where the rolling resistance is large, and therefore, the driving force is smaller than the rolling resistance and speed of the leaning vehicle is reduced in some cases. Accordingly, there is a probability that, when the driving force of the wheels is reduced by a shift-up of the multi-stage automatic transmission of the leaning vehicle while the leaning vehicle is turning in the lean state, the lean angle of the leaning vehicle increases.

On the other hand, in the configuration described above, in a case where the leaning vehicle is turning in the lean state, the gear-shift controller changes the timing of a shift-up of the plurality of gear stages in the multi-stage automatic transmission from the timing of a shift-up of the plurality of gear stages in upright traveling. That is, the gear-shift controller sets the threshold of the vehicle speed at which a shift-up of the plurality of gear stages is performed when the leaning vehicle turns in the lean state to the second vehicle speed threshold that is larger than the first vehicle speed threshold at which a shift-up of the plurality of gear stages is performed in upright traveling if the value related to the accelerator opening degree is the predetermined value, or sets the threshold of the value related to the accelerator opening degree at which a shift-up of the plurality of gear stages is performed when the leaning vehicle turns in the lean state to the second accelerator opening degree related threshold that is smaller than the first accelerator opening degree related threshold at which a shift-up of the plurality of gear stages is performed in upright traveling at the predetermined vehicle speed. Thus, change of the driving force caused by a shift-up of the plurality of gear stages can be suppressed.

Accordingly, while the leaning vehicle is turning in the lean state, change of the lean angle occurring in the leaning vehicle due to a shift-up of the plurality of gear stages in the multi-stage automatic transmission can be reduced. Therefore, while the leaning vehicle is turning in the lean state, a posture change occurring in the leaning vehicle due to a shift-up of the plurality of gear stages in the multi-stage automatic transmission can be reduced.

In another aspect, the leaning vehicle according to the present invention preferably includes the following configuration. While the leaning vehicle is turning in the lean state, the gear-shift controller changes the first vehicle speed threshold or the first accelerator opening degree related threshold, based on a physical quantity related to a rolling resistance of the wheels.

By changing the timing of a shift-up of the plurality of gear stages in accordance with the physical quantity related to the rolling resistance of the wheels, a posture change occurring in the leaning vehicle can be further reduced.

In another aspect, the physical quantity related to the rolling resistance of the wheels includes at least one of a lean angle of the leaning vehicle or an acceleration in an up-down shaft direction of the vehicle body in a state where the leaning vehicle is turning in the lean state.

Thus, in a state where the leaning vehicle is turning in a lean state, by changing the timing of a shift-up of the plurality of gear stages in the multi-stage automatic transmission using at least one of the lean angle of the leaning vehicle between the vertical line of the road surface and an up-down direction reference line of the leaning vehicle or the acceleration in an up-down direction of the vehicle body as the physical quantity related to the rolling resistance of the wheels, reduction in the driving force of the leaning vehicle can be suppressed. Accordingly, the posture change occurring in the leaning vehicle can be further reduced.

In another aspect, the leaning vehicle according to the present invention preferably includes the following configuration. While the leaning vehicle is turning in the lean state, if the rolling resistance of the wheels is larger than a predetermined value, the gear-shift controller inhibits a shift-up of the plurality of gear stages.

Thus, while the leaning vehicle is turning in the lean state, if the rolling resistance of the wheels is larger than the predetermined value, that is, if it is expected that the driving force of the leaning vehicle is reduced by a shift-up of the multi-stage automatic transmission, gear-shift control by the gear-shift controller can be facilitated by inhibiting a shift-up of the plurality of gear stages in the multi-stage automatic transmission.

In another aspect, the leaning vehicle according to the present invention preferably includes the following configuration. The gear-shift controller includes reference data including the value related to the accelerator opening degree and the vehicle speed as parameters used for determining a timing of a shift-up from the first gear stage to the second gear stage in the multi-stage automatic transmission when the leaning vehicle travels in an upright state, and performs, when the leaning vehicle turns in the lean state, changing of the plurality of gear stages in the multi-stage automatic transmission at vehicle speed that is larger than the vehicle speed at the timing of the shift-up determined based on the reference data if the value related to the accelerator opening degree is a predetermined value, or at a smaller value than the value related to the accelerator opening degree at the timing of the shift-up determined based on the reference data if the vehicle speed is a predetermined vehicle speed.

Thus, in a case where the leaning vehicle turns in the lean state, changing of the plurality of gear stages in the multi-stage automatic transmission can be easily performed at vehicle speed that is larger than the vehicle speed at which shift-up is performed when the leaning vehicle travels in an upright state or at a smaller value than the value related to the accelerator opening degree at which shift-up is performed when the leaning vehicle travels in an upright state.

The terminology used herein is for the purpose of describing particular embodiments only and is not intended to be limiting of the claimed invention.

As used herein, the term "and/or" includes any and all combinations of one or more of the associated listed items.

It will be further understood that the terms "including", "comprising" or "having" and variations thereof when used in this specification, specify the presence of stated features, steps, operations, elements, components, and/or their equivalents, but do not preclude the presence or addition of one or more other features, steps, operations, elements, components, and/or groups thereof.

It will be further understood that the terms "mounted," "connected," "coupled," and/or their equivalents are used broadly and encompass both "direct and indirect" mounting, connecting, and coupling. Further, "connected" and "coupled" are not restricted to physical or mechanical connections or couplings, and can include electrical connections or couplings.

Unless otherwise defined, all terms (including technical and scientific terms) used herein have the same meaning as commonly understood by one having ordinary skill in the art to which the invention belongs.

Accordingly, for the sake of clarity, this description will refrain from repeating every possible combination of the individual steps in an unnecessary fashion. Nevertheless, the specification and claims should be read with the understanding that such combinations are entirely within the scope of the claimed invention.

In this specification, embodiments of a leaning vehicle according to the present invention will be described.

In the following description, for purposes of explanation, numerous specific details are set forth in order to provide a thorough understanding of the present invention. It will be evident, however, to one skilled in the art that the present invention may be practiced without these specific details.

It is not intended to limit the invention to the specific embodiments illustrated by the figures or description below.

### [Leaning Vehicle]

A leaning vehicle herein is a vehicle that turns in a leaning posture. Specifically, the leaning vehicle is a vehicle that leans leftward when turning to the left and leans rightward when turning to the right in the left-right direction of the vehicle. The leaning vehicle may be a single-passenger vehicle or a vehicle on which a plurality of passengers can ride. The leaning vehicle includes all the types of vehicles that turn in leaning postures, such as three-wheeled vehicles and four-wheeled vehicles as well as two-wheeled vehicles.

### [Driving Source]

A driving source herein refers to a device that applies a driving force to wheels. The driving source includes, for example, a device capable of applying a driving force, such as an engine, a motor, or the like. The driving source may be a hybrid system obtained by combining an engine and a motor.

### [Automatic Transmission]

An automatic transmission herein refers to a device that performs a gear-shift, based on a signal generated by a gear-shift controller. Thus, the automatic transmission performs a gear-shift without a gear-shift operation by a driver.

### [Value Related to Accelerator Opening degree]

An accelerator opening degree herein refers to a driving amount of a throttle that is driven by a driver's direct or indirect operation to adjust a driving force of a driving source.

In a case where the driving source is an engine, the accelerator opening degree is an opening degree of a throttle valve that supplies air to the driving source in accordance with an operation amount of an accelerator operator operated by the driver or a vehicle state. In a case where the driving source is a motor, the accelerator opening degree is an operation amount of the accelerator operator operated by the driver. In general, as the accelerator opening degree increases, the driving force of the driving source increases. A value related to the accelerator opening degree includes not only the accelerator opening degree described above, but also a value determined by the accelerator opening degree. For example, the value related to the accelerator opening degree includes a throttle opening degree, a request torque, or the like determined by the accelerator opening degree.

### [Changing of Gear Stages]

Changing of gear stages herein refers to change of gear stages of an automatic transmission. The changing includes both a shift-up in which changing to a gear stage having a small gear-shift ratio is performed and a shift-down in which changing to a gear stage having a large gear-shift ratio is performed.

### [Upright Traveling]

Upright traveling herein includes not only a case where a leaning vehicle travels in a state where an up-down direction of the leaning vehicle coincides with a vertical direction but also a case where the leaning vehicle travels in a state where the leaning vehicle leans to an extent in which a posture of the leaning vehicle does not change due to changing a gear stage of an automatic transmission.

### [Lean Angle]

A lean angle herein refers to an angle between a vertical line of a road surface and an up-down direction reference line of a leaning vehicle when the leaning vehicle turns in a lean state in which the leaning vehicle leans with respect to the vertical line of the road surface in a left direction or in a right direction about a rotation axis extending in a front-rear direction of the leaning vehicle as a center. The up-down direction reference line is a reference line extending in an up-down direction of the leaning vehicle.

### ADVANTAGEOUS EFFECTS OF INVENTION

One embodiment of the present invention can reduce a posture change occurring in a leaning vehicle due to shift-up of a plurality of gear stages in a multi-stage automatic transmission while the leaning vehicle is turning in the lean state.

### BRIEF DESCRIPTION OF DRAWINGS

[FIG. 1] FIG. 1 is a left side view of a vehicle according to a first embodiment of the present invention.
[FIG. 2] FIG. 2 is a cross-sectional view illustrating a schematic configuration of a multi-stage automatic transmission.
[FIG. 3] FIG. 3 is a cross-sectional view illustrating a schematic configuration of a shift mechanism.
[FIG. 4] FIG. 4 is a view illustrating a vehicle that turns leftward when seen from the front.
[FIG. 5] FIG. 5 is a block diagram illustrating a schematic configuration of a controller.
[FIG. 6] FIG. 6 is a graph illustrating a gear-shift determination map used for performing gear-shift determination by the controller.
[FIG. 7] FIG. 7 is a flowchart illustrating an operation flow of gear-shift control by the controller.
[FIG. 8] FIG. 8 is a block diagram according to a first variation of the first embodiment and corresponding to FIG. 5.
[FIG. 9] FIG. 9 is a flowchart according to the first variation of the first embodiment and corresponding to FIG. 7.
[FIG. 10] FIG. 10 is a block diagram according to a second variation of the first embodiment and corresponding to FIG. 5.
[FIG. 11] FIG. 11 is a flowchart according to the second variation of the first embodiment and corresponding to FIG. 7.
[FIG. 12] FIG. 12 is a view of a multi-stage automatic transmission of a vehicle according to a second embodiment and corresponding to FIG. 2.
[FIG. 13] FIG. 13 is a diagram schematically illustrating a configuration of a multi-stage automatic transmission.
[FIG. 14] FIG. 14 is a diagram illustrating respective examples of a left side view of a vehicle, a cross-sectional view of a multi-stage automatic transmission, and a block diagram of a controller.

### DESCRIPTION OF EMBODIMENTS

Embodiments of the present invention will be described hereinafter with reference to the drawings. The dimensions of components in the drawings do not strictly represent actual dimensions of the components and dimensional proportions of the components, for example.

In the following description, arrow F in the drawings represents a forward direction of a vehicle. Arrow RR in the drawings represents a rearward direction of the vehicle. Arrow U in the drawings represents an upward direction of the vehicle. Arrow R in the drawings represents a rightward direction of the vehicle. Arrow L in the drawings represents a leftward direction of the vehicle. The front, rear, left, and right directions respectively refer to the front, rear, left, and right directions when seen from a driver driving the vehicle.

### (First Embodiment)

### <Overall Configuration>

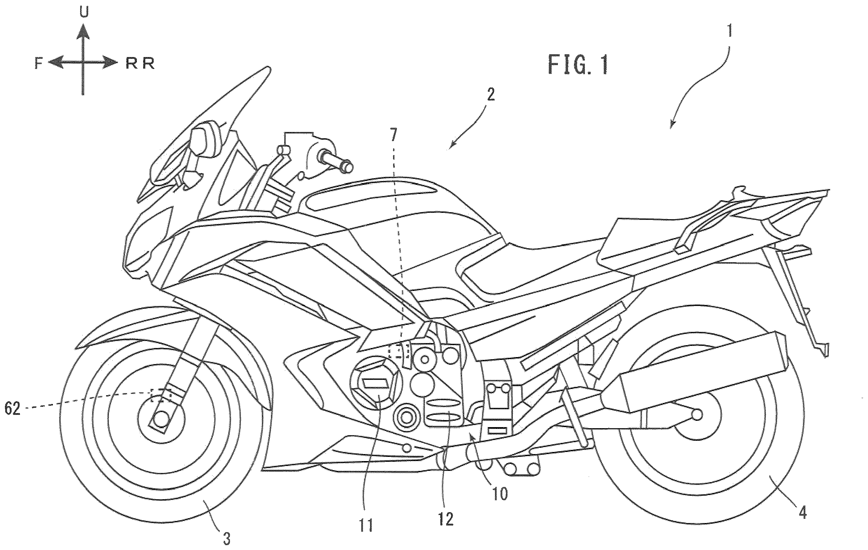

FIG. 1 illustrates a left side view of a vehicle 1 according to an embodiment of the present invention. The vehicle 1 is, for example, a motorcycle. Specifically, the vehicle 1 is a leaning vehicle that leans leftward when turning to the left and turns rightward when turning to the right.

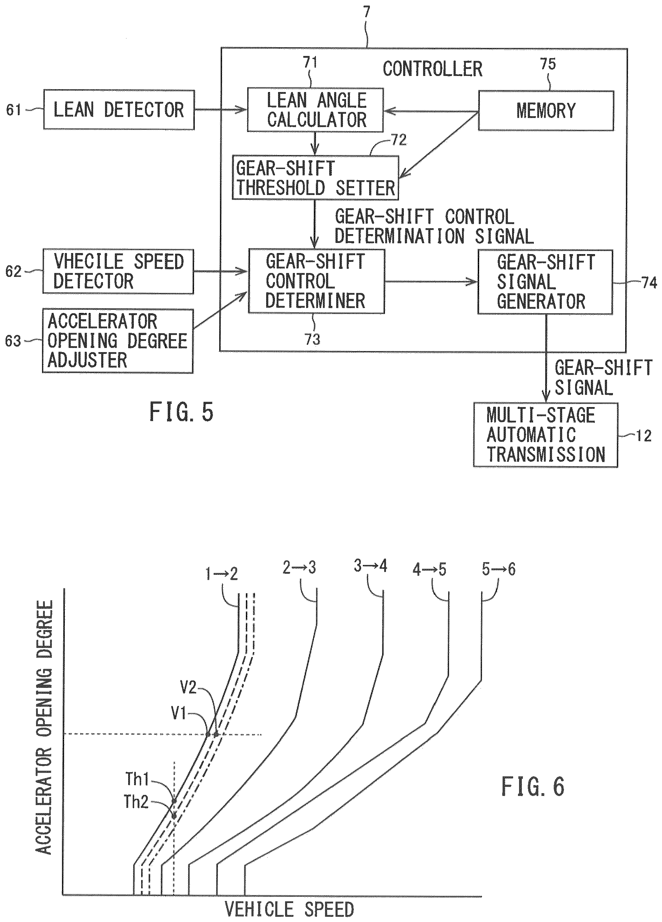

The vehicle 1 includes a vehicle body 2, a front wheel 3, a rear wheel 4, a controller 7, a lean detector 61, a vehicle speed detector 62, an accelerator opening degree adjuster 63, and an engine unit 10. The lean detector 61 and the accelerator opening degree adjuster 63 are illustrated in FIG. 5.

The engine unit 10 for supplying a rotation driving force to the rear wheel 4 is attached to the frame of the vehicle body 2. The engine unit 10 includes an engine 11 as an example of a driving source, and a multi-stage automatic transmission 12 that shifts the speed of rotation output from the engine 11. The configuration of the engine unit 10 will be specifically described later.

The controller 7 for controlling driving of the engine unit 10 is disposed in the vehicle body 2. The controller 7 is a so-called electric control unit (ECU), and controls driving of other components in the vehicle 1 as well as the engine unit 10.

The lean detector 61, the vehicle speed detector 62, and the accelerator opening degree adjuster 63 are also disposed in the vehicle body 2. The vehicle speed detector 62 detects vehicle speed of the vehicle 1. That is, the vehicle speed detector 62 functions as a speed detector.

In this embodiment, the lean detector 61 is, for example, an inertial measurement unit (IMU), and detects an angular velocity (lean angular velocity) when the vehicle 1 leans with respect to a vertical axis. The lean angular velocity detected by the lean detector 61 is used for setting a threshold used for gear-shift control by a gear-shift threshold setter 72 of the controller 7 described later.

The lean detector 61 may be configured to detect at least one of an angular velocity (pitch angular velocity) when the vehicle 1 rotates forward or rearward about a rotation axis extending in the left-right direction of the vehicle 1 or a yaw rate that is an angular velocity when the vehicle 1 rotates about the vertical axis when seen from above.

The vehicle speed detector 62 detects vehicle speed of the vehicle 1, for example, by detecting rotation speed of the front wheel 3. The vehicle speed detector 62 may be configured to detect the vehicle speed of the vehicle 1 by detecting rotation speed of the rear wheel 4. The vehicle speed detector 62 may have some other configuration capable of detecting the vehicle speed of the vehicle 1.

The accelerator opening degree adjuster 63 includes a throttle valve, not shown. An opening degree of the throttle valve of the accelerator opening degree adjuster 63 is adjusted by the control section 7. The opening degree of the throttle valve of the accelerator opening degree adjuster 63 is adjusted, and thus, a driving force generated by the engine 11 of the engine unit 10 is adjusted.

Note that, in the vehicle body 2, an engine speed detector may be disposed. The engine speed detector detects engine speed of the engine 11.

### <Engine Unit>

Next, a configuration of the engine unit 10 will be described.

The engine unit 10 includes the engine 11 and the multi-stage automatic transmission 12. The engine 11 has a configuration similar to that of a typical engine. Thus, the engine 11 will not be described in detail.

The multi-stage automatic transmission 12 includes a plurality of gear stages and automatically changes the gear stages stepwise to thereby change a driving force to be transferred from the engine 11 to the rear wheel 4. Specifically, the multi-stage automatic transmission 12 includes a transmission mechanism 20, a clutch 40, and a shift mechanism 50.

The term of automatically changing the gear stages stepwise refers to changing to a next gear stage having a large gear-shift ratio or a next gear stage having a small gear-shift ratio without a gear-shift operation by a driver of the vehicle 1. At this time, an instruction signal instructing changing of the gear stages may be input, or may not be input, from the driver of the vehicle 1to the multi-stage automatic transmission 12.

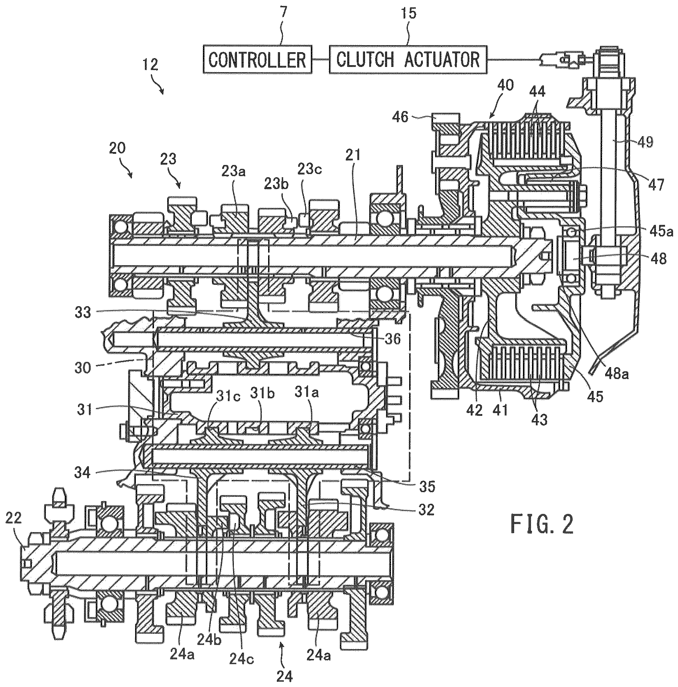

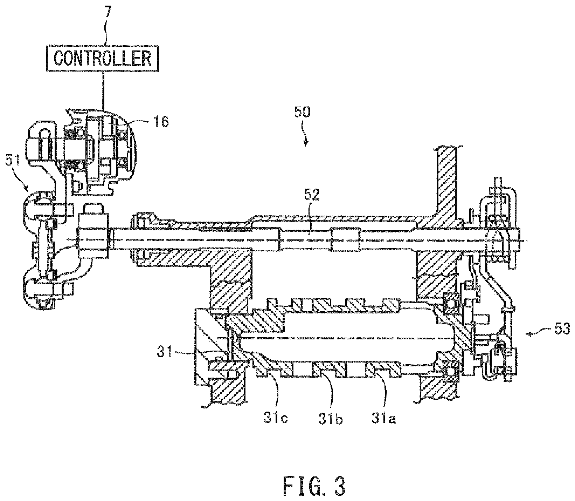

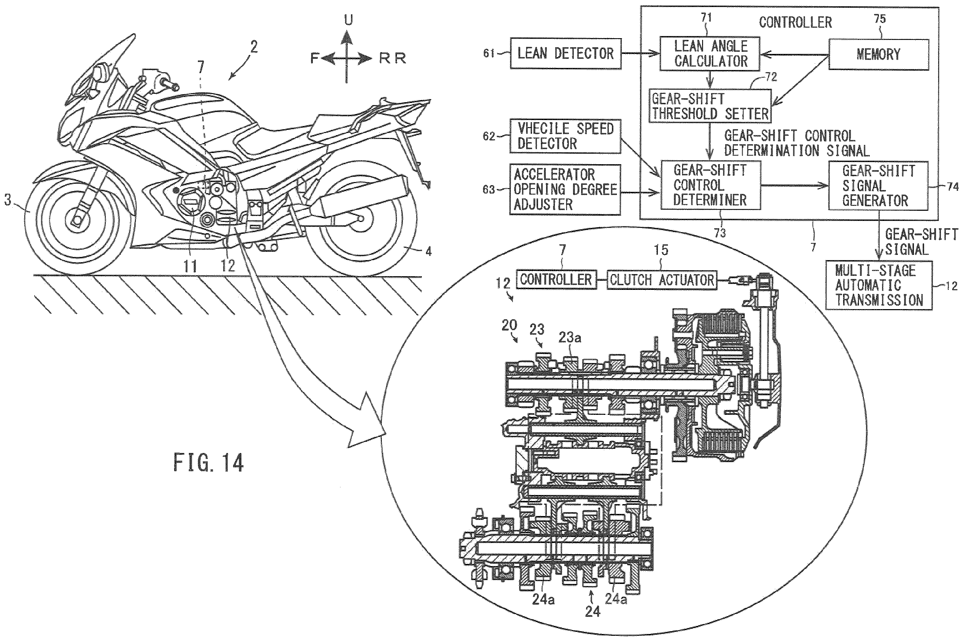

FIG. 2 illustrates schematic configurations of the transmission mechanism 20 and the clutch 40 of the multi-stage automatic transmission 12. FIG. 3 illustrates a schematic configuration of the shift mechanism 50 of the multi-stage automatic transmission 12. FIG. 14 illustrates schematic configurations of the vehicle 1 and the multi-stage automatic transmission 12. FIG. 14 also illustrates a block diagram of the controller 7 described later. Since FIG. 14 corresponds to FIGS. 1, 2, and 5, a detailed description of FIG. 14 will be omitted.

The transmission mechanism 20 is connected to a crankshaft, not shown, of the engine 11. The transmission mechanism 20 changes a torque transferred from the crankshaft to a predetermined torque, and outputs the predetermined torque.

The clutch 40 is configured to transmit rotation of the crankshaft to the transmission mechanism 20. That is, the clutch 40 is configured to switch between transfer and non-transfer of rotation of the crankshaft to the transmission mechanism 20.

The shift mechanism 50 performs a gear-shift of the transmission mechanism 20 through a sequential shift mechanism 30 described later, and retains a gear stage selected by the transmission mechanism 20 until the next gear-shift is performed by the transmission mechanism 20.

As described above, a driving force is transferred to the transmission mechanism 20 of the multi-stage automatic transmission 12 from the engine 11 through the clutch 40.

With reference to FIG. 2 and FIG. 3, the configuration of the multi-stage automatic transmission 12 including the transmission mechanism 20, the clutch 40, and the shift mechanism 50 will be described in detail.

The clutch 40 is, for example, a multiplate friction clutch. The clutch 40 includes a bottomed cylindrical clutch housing 41, a bottomed cylindrical clutch boss 42, a plurality of friction plates 43 and a plurality of clutch plates 44 that are friction discs, a pressure plate 45, and an input gear 46. The clutch 40 is not limited to a multiplate clutch as described in this embodiment. The clutch 40 may be an automatic centrifugal clutch, for example, using a centrifugal weight.

The clutch housing 41 is disposed concentrically with a main shaft 21 of the transmission mechanism 20 and is rotatable relative to the main shaft 21. A bottom portion of the bottomed cylindrical clutch housing 41 is connected to the input gear 46. The input gear 46 meshes with a gear (not shown) disposed on the crankshaft of the engine 11 to thereby rotate together with the gear. The clutch housing 41 and the input gear 46 rotate together with the crankshaft, and are rotatable with respect to the main shaft 21 of the transmission mechanism 20.

The plurality of friction plates 43 as ring-shaped thin plates are arranged inside the clutch housing 41. The plurality of friction plates 43 are arranged in the thickness direction inside the clutch housing 41. The plurality of friction plates 43 are attached to the inner peripheral surface of the clutch housing 41 to be rotatable together with the clutch housing 41 and displaceable with respect to the clutch housing 41 along the axial direction of the main shaft 21.

An end portion of the main shaft 21 penetrates the bottom portion of the clutch housing 41. A bottom portion of the clutch boss 42 is fixed to a front end portion of the main shaft 21 penetrating the clutch housing 41. Accordingly, the clutch boss 42 rotates together with the main shaft 21.

The clutch boss 42 is disposed inside the clutch housing 41. The plurality of clutch plates 44 as ring-shaped thin plates are disposed on an outer peripheral portion of the clutch boss 42. That is, the plurality of clutch plates 44 are attached to the outer peripheral surface of the clutch boss 42 to be rotatable together with the clutch boss 42 and displaceable with respect to the clutch boss 42 along the axial direction of the main shaft 21.

The plurality of friction plates 43 and the plurality of clutch plates 44 are alternately arranged along the axial direction of the main shaft 21.

The pressure plate 45 is a substantially disc-shaped member. The clutch housing 41, the clutch boss 42, and the pressure plate 45 are arranged in this order with respect to the main shaft 21 along the axial direction of the main shaft 21. The pressure plate 45 is disposed outside the main shaft 21 in the axial direction to face the clutch boss 42 in the axial direction. The pressure plate 45 is displaceable with respect to the clutch boss 42 along the axial direction of the main shaft 21 and is also pressed by a clutch spring 47 toward the clutch boss 42.

As described above, when the pressure plate 45 is pressed toward the clutch boss 42, each of the friction plates 43 and each of the clutch plates 44 are thereby pushed against each other in the thickness direction. That is, the plurality of friction plates 43 and the plurality of clutch plates 44 are engaged with one another. As described above, while the plurality of friction plates 43 and the plurality of clutch plates 44 are engaged, the clutch boss 42 and the clutch housing 41 rotate together by friction between the friction plates 43 and the clutch plates 44. This state is an engaged state of the clutch 40, that is, a transfer state in which a driving force is transferred.

In this engaged state of the clutch 40, rotation is allowed to be transferred from the clutch housing 41 to the clutch boss 42, that is, from the input gear 46 to the main shaft 21, through each of the friction plates 43 and each of the clutch plates 44.

A push rod 48 penetrates a center portion of the pressure plate 45 when seen in the axial direction of the main shaft 21. The push rod 48 is disposed to extend in the axial direction of the main shaft 21. That is, the axial direction of the push rod 48 coincides with the axial direction of the main shaft 21. A flange 48a is provided on one end of the push rod 48. The other end of the push rod 48 is connected to a rod 49. The rod 49 is rotatable about the axis by a clutch actuator 15. The clutch actuator 15 is controlled to be driven based on a clutch signal output from the controller 7.

The push rod 48 is configured to be movable along the axial direction of the main shaft 21 by rotation of the rod 49. In a case where the push rod 48 moves in a direction away from the main shaft 21 (rightward in FIG. 2), the pressure plate 45 receives a force in a direction away from the clutch boss 42 in the axial direction by the flange 48a of the push rod 48. Accordingly, the clutch spring 47 is deformed to be compressed, and thus, a force with which the pressure plate 45 pushes the friction plates 43 and the clutch plates 44 decreases.

Consequently, a contact pressure between the friction plates 43 and the clutch plates 44 decreases. In this manner, the friction plates 43 and the clutch plates 44 are disengaged, and the clutch boss 42 and the clutch housing 41 rotate relative to each other. This state is a disengaged state of the clutch 40, that is, a non-transfer state in which a driving force is not transferred.

That is, the clutch 40 is switched between the engaged state and the disengaged state by movement of the push rod 48 along the axial direction of the main shaft 21.

The pressure plate 45 is rotatable about the push rod 48 with a bearing 45a interposed therebetween. Accordingly, while the clutch 40 is in the engaged state, the pressure plate 45 rotates together with the clutch housing 41 and the clutch boss 42.

The transmission mechanism 20 is a multistep transmission mechanism. The transmission mechanism 20 includes the main shaft 21, an output shaft 22 disposed in parallel with the main shaft 21, a plurality of driving gears 23, a plurality of driven gears 24, and the sequential shift mechanism 30. The sequential shift mechanism 30 includes a shift cam 31, shift forks 32 through 34, and guide shafts 35 and 36 for guiding movement of the shift forks 32 through 34.

The main shaft 21 is provided with the plurality of driving gears 23. The plurality of driving gears 23 are transmission gears constituting part of the plurality of gear stages. On the other hand, the output shaft 22 is provided with the plurality of driven gears 24 always meshing with the plurality of driving gears 23. The plurality of driven gears 24 are transmission gears constituting part of the plurality of gear stages. The transmission mechanism 20 is a so-called gear-type transmission mechanism in which the plurality of driving gears 23 and the plurality of driven gears 24 always mesh with each other in a one-to-one relationship.

In the transmission mechanism 20, in accordance with the gear stage, the sequential shift mechanism 30 selects a combination of a driving gear 23 and a driven gear 24 for transferring a driving force among the plurality of driving gears 23 and the plurality of driven gears 24.

Specifically, a predetermined driving gear 23a in the plurality of driving gears 23 is fixed to the main shaft 21 in the rotation direction, while being movable along the axial direction of the main shaft 21. Predetermined driven gears 24a in the plurality of driven gears 24 are fixed to the output shaft 22 in the rotation direction, while being movable along the axial direction of the output shaft 22. Positions of the predetermined driving gear 23a and the predetermined driven gears 24a in the axial direction are determined by the sequential shift mechanism 30 in accordance with the gear stage.

The driving gears 23 except for the predetermined driving gear 23a in the plurality of driving gears 23 include driving gears 23 fixed to the main shaft 21 in the axial direction and rotatable with respect to the main shaft 21, and driving gears 23 fixed to the main shaft 21 in the axial direction and rotatable together with the main shaft 21. Driven gears 24 except for the predetermined driven gears 24a in the plurality of driven gears 24 are fixed to the output shaft 22 in the axial direction and rotatable with respect to the output shaft 22.

A configuration of the transmission mechanism 20 is similar to a configuration of a known transmission mechanism (e.g., Japanese Patent Application Publication No. 2015-117798), and thus, will not be described in detail.

The sequential shift mechanism 30 includes the shift cam 31 and the shift forks 32 through 34. As illustrated in FIG. 3, cam grooves 31a through 31c are formed on the outer peripheral surface of the shift cam 31 of the sequential shift mechanism 30. The cam grooves 31a through 31c are arranged along the axial direction of the shift cam 31 such that each of the cam grooves 31a through 31c extends circumferentially on the outer peripheral surface of the shift cam 31. The cam grooves 31a through 31c are arranged on the outer peripheral surface of the shift cam 31 such that positions of the cam grooves 31a through 31c in the axial direction of the shift cam 31 change in accordance with the positions thereof in the circumferential direction of the shift cam 31. One end of each of the shift forks 32 through 34 is located in an associated one of the cam grooves 31a through 31c. Configurations of the cam grooves 31a through 31c of this embodiment are similar to those of known cam grooves (e.g., Japanese Patent Application Publication No. 2015-117798), and thus, will not be described in detail.

As illustrated in FIG. 2, the shift forks 32 through 34 are disposed on the guide shafts 35 and 36 parallel to the axis of the shift cam 31 and are movable along the axial direction of the guide shafts 35 and 36. The other end of each of the shift forks 32 through 34 is connected to the predetermined driving gear 23a and the predetermined driven gear 24a. Accordingly, when the shift cam 31 rotates, the shift forks 32 through 34 move in the axial direction of the shift cam 31 along the cam grooves 31a through 31c on the outer peripheral surface of the shift cam 31. Thus, with the rotation of the shift cam 31, positions of the predetermined driving gear 23a and the predetermined driven gear 24a in the axial direction are determined through the shift forks 32 through 34.

The predetermined driving gear 23a and the driving gear 23 adjacent to the predetermined driving gear 23a in the axial direction of the main shaft 21 respectively include dogs 23b and 23c that mesh with each other. The predetermined driven gear 24a and the driven gear 24 adjacent to the predetermined driven gears 24a in the axial direction of the output shaft 22 respectively include dogs 24b and 24c that mesh with each other. As described above, with rotation of the shift cam 31, when the predetermined driving gear 23a moves along the axial direction through the shift fork 33, the dog 23b of the predetermined driving gear 23a meshes with the dog 23c of the driving gear 23 adjacent to the predetermined driving gear 23a in the axial direction of the main shaft 21. With the rotation of the shift cam 31, when each of the predetermined driven gears 24a moves along the axial direction through its corresponding one of the shift forks 32 or 34, the dog 24b of the predetermined driven gear 24a meshes with the dog 24c of the driven gear 24 adjacent to the predetermined driven gear 24a in the axial direction of the output shaft 22.

Accordingly, a combination of the driving gear 23 and the driven gear 24 for transferring a driving force from the main shaft 21 to the output shaft 22 is selected. That is, in the transmission mechanism 20, in a case where the predetermined driving gear 23a moves along the axial direction through the shift fork 33 in accordance with rotation of the shift cam 31, the driving gear 23 associated with a specific gear stage (i.e., gear stage except for the predetermined gear stage) in the plurality of driving gears 23 is fixed to the main shaft 21 by the predetermined driving gear 23a to rotate together with the main shaft 21. On the other hand, in a case where the predetermined driven gear 24a moves along the axial direction through its corresponding one of the shift forks 32 or 34 in accordance with rotation of the shift cam 31, the driven gear 24 associated with a specific gear stage (i.e., gear stage except for the predetermined gear stage) in the plurality of driven gears 24 is fixed to the output shaft 22 by the predetermined driven gear 24a to rotate together with the output shaft 22.

In the manner described above, only the driving gear 23 and the driven gear 24 associated with the specific gear stage in the transmission mechanism 20 transfer a driving force from the main shaft 21 to the output shaft 22. Accordingly, the transmission mechanism 20 transfers a driving force output from the engine 11, from the main shaft 21 to the output shaft 22 at a predetermined gear-shift ratio in each gear stage.

The shift mechanism 50 causes the shift cam 31 of the transmission mechanism 20 to rotate in accordance with a gear-shift signal output from the controller 7. The shift mechanism 50 is driven by a shift actuator 16. The shift actuator 16 is controlled and driven based on a gear-shift signal output from the controller 7.

The shift mechanism 50 includes a shift rod 51, a shift shaft 52, and an intermittent feeder 53. A driving force of the shift actuator 16 is transferred to the shift rod 51. One end of the shift shaft 52 is connected to the shift rod 51. The other end of the shift shaft 52 is connected to the shift cam 31 through the intermittent feeder 53. The shift actuator 16 causes the shift shaft 52 to rotate in a predetermined direction through the shift rod 51 based on a gear-shift signal output from the controller 7. This predetermined direction is switched in opposite directions between a shift-up (changing to a gear stage having a smaller gear-shift ratio) and a shift-down (changing to a gear stage having a larger gear-shift ratio).

The shift shaft 52 rotates with a driving force of the shift actuator 16 to thereby cause the shift cam 31 to rotate about the axis through the intermittent feeder 53. When the shift shaft 52 rotates in a predetermined direction, the intermittent feeder 53 causes the shift cam 31 to rotate by a certain angle in a rotation direction corresponding to the predetermined direction. A configuration of the intermittent feeder 53 is similar to a known configuration (e.g., Japanese Patent Application Publication No. 2015-117798). Thus, the configuration of the intermittent feeder 53 will not be described in detail.

With the configuration described above, when the shift actuator 16 is driven based on a gear-shift signal output from the controller 7, a driving force of the shift actuator 16 causes the shift shaft 52 to rotate in a predetermined direction through the shift rod 51. In accordance with the rotation direction of the shift shaft 52, the intermittent feeder 53 causes the shift cam 31 to rotate by a certain angle in a rotation direction corresponding to the predetermined direction.

Accordingly, in the transmission mechanism 20, the shift forks 32 through 34 move in the axial direction of the shift cam 31 along the cam grooves 31a through 31c on the shift cam 31. With such movement of the shift forks 32 through 34, the predetermined driving gear 23a and the driving gear 23 associated with the gear stage are engaged through the dogs 23b and 23c thereof, whereas one of the predetermined driven gears 24a and the driven gear 24 associated with the gear stage are engaged through the dogs 24b and 24c thereof. Consequently, the transmission mechanism 20 can transfer a driving force at a gear-shift ratio of each gear stage from the main shaft 21 to the output shaft 22 through the driving gear 23 and the driven gear 24 associated with the gear stage.

### <Controller>

The controller 7 controls driving of components of the vehicle 1, such as the engine unit 10. The controller 7 is, for example, an electric control unit (ECU). In this embodiment, the controller 7 generates a gear-shift signal for instructing changing of gear stages and outputs the gear-shift signal to the multi-stage automatic transmission 12. The controller 7 of this embodiment controls driving of the multi-stage automatic transmission 12, based on vehicle speed and an accelerator opening degree of the vehicle 1. That is, the controller 7 constitutes a gear-shift controller.

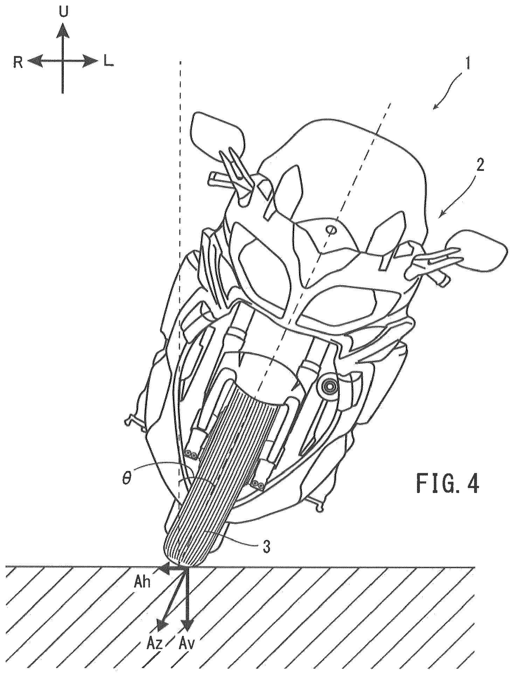

In this embodiment, the vehicle 1 leans leftward when turning to the left and leans rightward when turning to the right. FIG. 4 is a view of the vehicle 1 that turns leftward, when seen from the front. As illustrated in FIG. 4, while the vehicle 1 turns, the vehicle 1 leans at a predetermined lean angle θ with respect to a vertical axis (broken line in FIG. 4).

As described above, when the vehicle 1 turns to the left while leaning leftward or turns to the right while leaning rightward, a centrifugal force is applied to the vehicle 1, and therefore, ground loads of the front wheel 3 and the rear wheel 4 of the vehicle 1 are larger than those in upright traveling of the vehicle 1. Therefore, traveling resistances of the front wheel 3 and the rear wheel 4 of the vehicle 1 while the vehicle 1 is turning in the above described manner are larger than those while the vehicle 1 is traveling in an upright state. There is a probability that, when the plurality of gear stages of the multi-stage automatic transmission 12 are shifted up in the above described state, the driving force of the rear wheel 4 is reduced due to the traveling resistances of the front wheel 3 and the rear wheel 4 of the vehicle 1 and the vehicle speed of the vehicle 1 is reduced. Accordingly, there is a probability that the posture of the vehicle 1 changes so that the vehicle body 2 more largely leans.

On the other hand, in a case where the vehicle 1 turns in a lean state, the control section 7 of this embodiment delays a timing at which shift-up of the plurality of gear stages in the multi-stage automatic transmission 12 is performed from a timing at which shift-up of the plurality of gear stages in the multi-stage automatic transmission 12 is performed while the vehicle 1 is traveling in an upright state.

Specifically, while the vehicle 1 is turning in a lean state, at a predetermined accelerator opening degree (when a value related to the accelerator opening degree is a predetermined value), the control section 7 sets a vehicle speed threshold at which shift-up of the plurality of gear stages in the multi-stage automatic transmission 12 is performed to a second vehicle speed threshold that is larger than a first vehicle speed threshold at which shift-up of the plurality of gear stages in the multi-stage automatic transmission 12 is performed while the vehicle 1 is traveling in an upright state. Alternatively, while the vehicle 1 is turning in a lean state, at a predetermined vehicle speed, the control section 7 sets an accelerator opening degree threshold (accelerator opening degree related threshold) at which shift-up of the plurality of gear stages in the multi-stage automatic transmission 12 is performed to a second accelerator opening degree threshold (second accelerator opening degree related threshold) that is smaller than a first accelerator opening degree threshold (first accelerator opening degree related threshold) at which shift-up of the plurality of gear stages in the multi-stage automatic transmission 12 is performed while the vehicle 1 is traveling in an upright state.

FIG. 5 is a block diagram illustrating a schematic configuration of the controller 7. The controller 7 includes a lean angle calculator 71, a gear-shift threshold setter 72, a gear-shift control determiner 73, a gear-shift signal generator 74, and a memory 75.

The lean angle calculator 71 calculates a lean angle of the vehicle 1 from a lean angular velocity detected by the lean detector 61. A method for calculating the lean angle is similar to a known method, and therefore, will not be described in detail.

The gear-shift threshold setter 72 changes a threshold used when the gear-shift control determiner 73 performs gear-shift determination, based on the lean angle calculated by the lean angle calculator 71.

Specifically, as will be described later, the gear-shift control determiner 73 performs gear-shift determination, based on the vehicle speed and the accelerator opening degree of the vehicle 1, using a gear-shift determination map (reference data) including a relationship between the vehicle speed and the accelerator opening degree as illustrated in FIG. 6. The gear-shift determination map illustrated in FIG. 6 is used in a case where shift-up of the plurality of gear stages in the multi-stage automatic transmission 12 is performed.

In FIG. 6, "1 → 2" indicates a boundary at which shift-up from a first speed to a second speed is performed, "2 → 3" indicates a boundary at which shift-up from the second speed to a third speed is performed, "3 → 4" indicates a boundary at which shift-up from the third speed to a fourth speed is performed, "4 → 5" indicates a boundary at which shift-up from the fourth speed to a fifth speed is performed, and "5 → 6" indicates a boundary at which shift-up from the fifth speed to a sixth speed is performed,

When the lean detector 61 detects that the vehicle 1 is turning in a lean state, the gear-shift threshold setter 72 changes the threshold (boundary) for gear-shift determination as indicated by a broken line or a long and short dashed line in the gear-shift determination map. Note that the long and short dashed line indicates the threshold (boundary) for gear-shift determination in a case where the lean angle of the vehicle 1 is large, as compared to a case indicated by the broken line.

That is, when the lean detector 61 detects that the vehicle 1 is turning in a lean state, the gear-shift threshold setter 72 sets, at a predetermined accelerator opening degree, a vehicle speed threshold at which shift-up of the plurality of gear stages in the multi-stage automatic transmission 12 is performed to a second vehicle speed threshold (e.g., V2 in FIG. 6 in a case where shift-up from the first speed to the second speed is performed) that is larger than a first vehicle speed threshold (e.g., V1 in FIG. 6 in a case where shift-up from the first speed to the second speed is performed) at which shift-up is performed while the vehicle 1 is traveling in an upright state. When the lean detector 61 detects that the vehicle 1 is turning in a lean state, the gear-shift threshold setter 72 sets, at a predetermined vehicle speed, the accelerator opening degree threshold at which shift-up of the plurality of gear stages in the multi-stage automatic transmission 12 is performed to a second accelerator opening degree (e.g., Th2 in FIG. 6 in a case where shift-up from the first speed to the second speed is performed) that is smaller than a first accelerator opening degree threshold (e.g., Th1 in FIG. 6 in a case where shift-up from the first speed to the second speed is performed) at which shift-up is performed while the vehicle 1 is traveling in an upright state.

Accordingly, in a case where gear-shift determination is performed by the gear-shift control determiner 73, a timing at which shift-up of the plurality of gear stages of the multi-stage automatic transmission 12 is performed while the vehicle 1 is turning in a lean state can be delayed from a timing at which the shift-up is performed while the vehicle 1 is traveling in an upright state.

In an example of FIG. 6, the vehicle speed threshold in a case where shift-up of the plurality of gear stages in the multi-stage automatic transmission 12 from the first speed (first gear stage) to the second speed (second gear stage) is performed while the vehicle 1 is traveling in an upright state is the first vehicle speed threshold. The vehicle speed threshold in a case where shift-up of the plurality of gear stages in the multi-stage automatic transmission 12 from the first speed (first gear stage) to the second speed (second gear stage) is performed while the vehicle 1 is turning in a lean state is the second vehicle speed threshold. The accelerator opening degree threshold in a case where shift-up of the plurality of gear stages in the multi-stage automatic transmission 12 from the first speed (first gear stage) to the second speed (second gear stage) is performed while the vehicle 1 is traveling in an upright state is the first accelerator opening degree threshold. The accelerator opening degree threshold in a case where shift-up of the plurality of gear stages in the multi-stage automatic transmission 12 from the first speed (first gear stage) to the second speed (second gear stage) is performed while the vehicle 1 is turning in a lean state is the second accelerator opening degree threshold.

Each of the above described vehicle speed thresholds may be a vehicle speed threshold in a case where shift-up from the second speed to the third speed is performed, a vehicle speed threshold in a case where shift-up from the third speed to the fourth speed is performed, a vehicle speed threshold in a case where shift-up from the fourth speed to the fifth speed is performed, and a vehicle speed threshold in a case where shift-up from the fifth speed to the sixth speed is performed.

Each of the above described accelerator opening degree thresholds may be an accelerator opening degree threshold in a case where shift-up from the second speed to the third speed is performed, an accelerator opening degree threshold in a case where shift-up from the third speed to the fourth speed is performed, an accelerator opening degree threshold in a case where shift-up from the fourth speed to the fifth speed is performed, and an accelerator opening degree threshold in a case where shift-up from the fifth speed to the sixth speed is performed.

The first gear stage may be the second speed and the second gear stage may be the third speed. The first gear stage may be the third speed and the second gear stage may be the fourth speed. The first gear stage may be the fourth speed and the second gear stage may be the fifth speed. The first gear stage may be the fifth speed and the second gear stage may be the sixth speed.

The gear-shift control determiner 73 generates a gear-shift control determination signal, based on the vehicle speed of the vehicle 1 detected by the vehicle speed detector 62 and the accelerator opening degree set by the accelerator opening degree adjuster 63, using the gear-shift determination map set by the gear-shift threshold setter 72.

Specifically, if the vehicle speed of the vehicle 1 exceeds the second vehicle speed threshold (e.g., V2 in FIG. 6 in a case where shift-up from the first speed to the second speed is performed) at a predetermined accelerator opening degree while the vehicle 1 is turning in a lean state, the gear-shift control determiner 73 generates a gear-shift control signal for shifting up the plurality of gear stages in the multi-stage automatic transmission 12. Alternatively, if the accelerator opening degree of the vehicle 1 exceeds the second accelerator opening degree threshold (e.g., Th2 in FIG. 6 in a case where shift-up from the first speed to the second speed is performed) at a predetermined vehicle speed while the vehicle 1 is turning in a lean state, the gear-shift control determiner 73 generates a gear-shift control signal for shifting up the plurality of gear stages in the multi-stage automatic transmission 12.

While the vehicle 1 is not turning in a lean state, if the vehicle speed of the vehicle 1 exceeds the first vehicle speed threshold (e.g., V1 in FIG. 6 in a case where shift-up from the first speed to the second speed is performed) at the predetermined accelerator opening degree, the gear-shift control determiner 73 generates a gear-shift control signal for shifting up the plurality of gear stages in the multi-stage automatic transmission 12. Alternatively, while the vehicle 1 is not turning in a lean state, if the accelerator opening degree of the vehicle 1 exceeds the first accelerator opening degree threshold (e.g., Th1 in FIG. 6 in a case where shift-up from the first speed to the second speed is performed) at the predetermined vehicle speed, the gear-shift control determiner 73 generates a gear-shift control signal for shifting up the plurality of gear stages in the multi-stage automatic transmission 12.

Note that a case where the vehicle 1 is not turning in a lean state includes a case where the vehicle 1 is traveling in an upright state or like case. In upright traveling of the vehicle 1, a posture change of the vehicle 1 is less likely to occur even with the driving force of the rear wheel 4 reduced by a shift-up of the plurality of gear stages in the multi-stage automatic transmission 12.

When the gear-shift control determiner 73 generates a gear-shift control signal for shifting down the plurality of gear stages in the multi-stage automatic transmission 12, the gear-shift control determiner 73 uses a gear-shift determination map similar to the gear-shift determination map used while the vehicle 1 is traveling in an upright state even in a case where the vehicle 1 is turning in a lean state. That is, in performing a shift-down of the plurality of gear stages in the multi-stage automatic transmission 12, the gear-shift control determiner 73 generates a gear-shift control signal for shifting down the plurality of gear stages in the multi-stage automatic transmission 12 regardless of a traveling state of the vehicle 1.

The first vehicle speed threshold, the second vehicle speed threshold, the first accelerator opening degree threshold, and the second accelerator opening degree threshold are stored in the memory 75.

In response to the clutch signal output from the gear-shift control determiner 73, the gear-shift signal generator 74 generates a gear-shift signal for instructing the multi-stage automatic transmission 12 to disengage or engage the clutch 40.

If the gear-shift control determination signal output from the gear-shift control determiner 73 is a signal for permitting changing of the plurality of gear stages in the multi-stage automatic transmission 12, the gear-shift signal generator 74 generates a gear-shift signal for instructing for changing the gear stages in accordance with the vehicle speed, the engine speed, and the accelerator opening degree of the vehicle 1.

The generation of the gear-shift signal by the gear-shift signal generator 74 is similar to the generation of a gear-shift signal in general gear-shift control, and thus, will not be described in detail. The gear-shift signal generated by the gear-shift signal generator 74 is output to the multi-stage automatic transmission 12. In the multi-stage automatic transmission 12, driving of the clutch actuator 15 and the shift actuator 16 is controlled based on the gear-shift signal.

If the gear-shift control determination signal output from the gear-shift control determiner 73 is a signal for inhibiting a shift-up of the gear stages in the multi-stage automatic transmission 12, the gear-shift signal generator 74 does not generate a gear-shift signal.

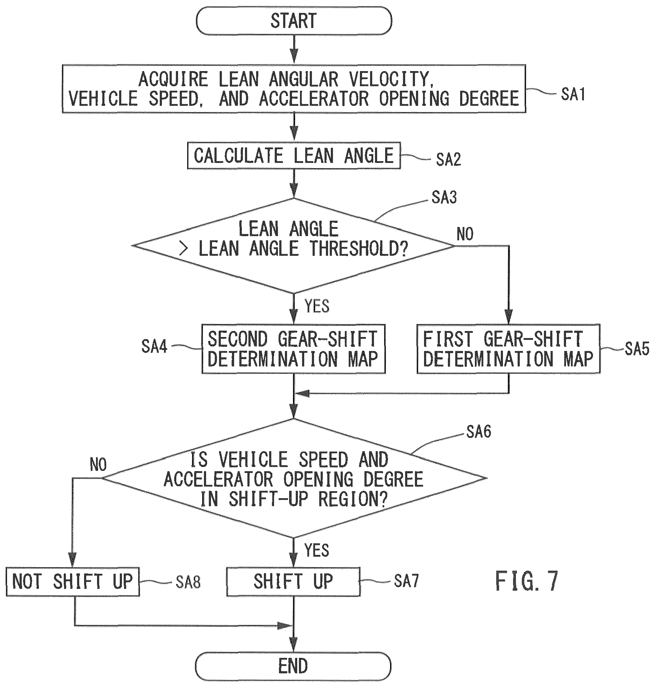

Next, gear-shift control by the controller 7 having the above described configuration will be described. FIG. 7 illustrates an operation flow of gear-shift control by the controller 7.

When the flow illustrated in FIG. 7 starts, the controller 7 first acquires each of data of a lean angular velocity detected by the lean detector 61, vehicle speed of the vehicle 1 detected by the vehicle speed detector 62, and an accelerator opening degree detected by the accelerator opening degree adjuster 63 (Step SA1).

The lean angle calculator 71 of the controller 7 calculates a lean angle of the vehicle 1 from the acquired lean angular velocity (Step SA2). The gear-shift threshold setter 72 sets a gear-shift determination map used for determination of gear-shift control in the gear-shift control determiner 73, based on whether the calculated lean angle is larger than a lean angle threshold stored in the memory 75 (Steps SA3 through SA5). Specifically, if the lean angle is larger than the lean angle threshold (YES in Step SA3), the gear-shift threshold setter 72 sets a gear-shift determination map used in the gear-shift control determiner 73 to a gear-shift determination map (second gear-shift determination map) used during turning in a leaning state (Step SA4).

In the gear-shift determination map used in turning in a lean state, at a predetermined accelerator opening degree, the vehicle speed threshold (second vehicle speed threshold) at which a shift-up of the plurality of gear stages in the multi-stage automatic transmission 12 is performed is larger than the first vehicle speed threshold at which the shift-up is performed while the vehicle 1 is traveling in an upright state. In the gear-shift determination map used in turning in a lean state, at a predetermined vehicle speed, the accelerator opening degree threshold (second accelerator opening degree threshold) at which a shift-up of the plurality of gear stages in the multi-stage automatic transmission 12 is performed is smaller than the first accelerator opening degree threshold at which the shift-up is performed while the vehicle 1 is traveling in an upright state.

Note that, in the gear-shift determination map used in turning in a lean state, at a predetermined accelerator opening degree, the vehicle speed threshold at which a shift-down of the plurality of gear stages in the multi-stage automatic transmission 12 is performed is the same as the vehicle speed threshold at which the shift-down is performed while the vehicle 1 is traveling in an upright state. In the gear-shift determination map used in turning in a lean state, at a predetermined vehicle speed, the accelerator opening degree at which a shift-down of the plurality of gear stages in the multi-stage automatic transmission 12 is performed is the same as the accelerator opening degree at which the a shift-down is performed while the vehicle 1 is traveling in an upright state.

On the other hand, if the lean angle is the lean angle threshold or less (NO in Step SA3), the gear-shift threshold setter 72 sets the gear-shift determination map used in the gear-shift control determiner 73 to a gear-shift determination map (first gear-shift determination map) at a time (at a normal time) other than in turning in a lean state (Step SA5).

In Step SA6 to which the process proceeds after the gear-shift determination map is set in Steps SA4 and SA5, the gear-shift control determiner 73 determines whether the vehicle speed and the accelerator opening degree acquired in Step SA1 have changed to a shift-up region on the gear-shift determination map set in Steps SA4 and SA5. Specifically, the gear-shift control determiner 73 determines whether at least one of the acquired vehicle speed or accelerator opening degree has changed to cross a boundary (a solid line in FIG. 6) indicating a timing of a shift-up of each gear stage in an increasing direction, in the gear-shift determination map illustrated in FIG. 6.

If the gear-shift control determiner 73 determines that the vehicle speed and the accelerator opening degree acquired in Step SA1 have changed to the shift-up region on the gear-shift determination map (YES in Step SA6), the gear-shift control determiner 73 generates a gear-shift control determination signal for performing a shift-up (Step SA7). Thus, the gear-shift signal generator 74 generates a gear-shift signal for performing a shift-up of the plurality of gear stages in the multi-stage automatic transmission 12 and outputs the gear-shift signal to the multi-stage automatic transmission 12.

On the other hand, if the gear-shift control determiner 73 determines that the vehicle speed and the accelerator opening degree acquired in Step SA1 have not changed to the shift-up region on the gear-shift determination map (NO in Step SA6), the gear-shift control determiner 73 does not generate a gear-shift control determination signal (Step SA8). Accordingly, in this case, a gear-shift signal for performing a shift-up is not output from the gear-shift signal generator 74 to the multi-stage automatic transmission 12, and therefore, a shift-up of the plurality of gear stages is not performed in the multi-stage automatic transmission 12.

Thereafter, the controller 7 terminates the operation in accordance with this flow (END).

As described above, when the vehicle 1 turns in a lean state, the controller 7 delays a timing of a shift-up of the plurality of gear stages in the multi-stage automatic transmission 12, as compared to a timing of a shift-up while the vehicle 1 is traveling in an upright state.

Accordingly, while the vehicle 1 is turning in a lean state, a posture change occurring in the vehicle 1 due to a shift-up of the plurality of gear stages in the multi-stage automatic transmission 12 can be reduced. Thus, the vehicle 1 that has a small posture change in turning and can be easily operated by a driver can be provided.

### (First Variation of First Embodiment)

A controller 107 (gear-shift controller) may be configured to delay a timing of a shift-up when the vehicle 1 turns in a lean state, as compared to a timing of a shift-up in upright traveling of the vehicle 1, based on an up-down shaft direction acceleration (which will be hereinafter referred to as a "Z direction acceleration") of the vehicle body 2 generated in the vehicle 1, instead of the lean angle of the vehicle 1. The Z direction acceleration is Az in FIG. 4.

As illustrated in FIG. 4, while the vehicle 1 is turning in a lean state, a centrifugal force is applied to the vehicle 1, and accordingly, the acceleration (Z direction acceleration Az) in the up-down shaft direction of the vehicle body 2 generated in the vehicle 1 increases. That is, the Z direction acceleration Az is obtained by combining an acceleration Av in a vertical direction and an acceleration Ah in a horizontal direction generated by a centrifugal force. Therefore, turning of the vehicle 1 in a lean state with a larger travel resistance than that in a case where the vehicle 1 is traveling in an upright state can be detected by detecting the Z direction acceleration Az.

The controller 107 may be configured to perform gear-shift control of the multi-stage automatic transmission 12, based on the Z direction acceleration Az detected by an acceleration detector 65.

The acceleration detector 65 is, for example, an inertial measurement unit (IMU) and detects the Z direction acceleration Az generated in the vehicle 1. The acceleration detector 65 may have some other configuration capable of detecting the Z direction acceleration Az. The acceleration detector 65 may be configured to detect an acceleration in some other direction.

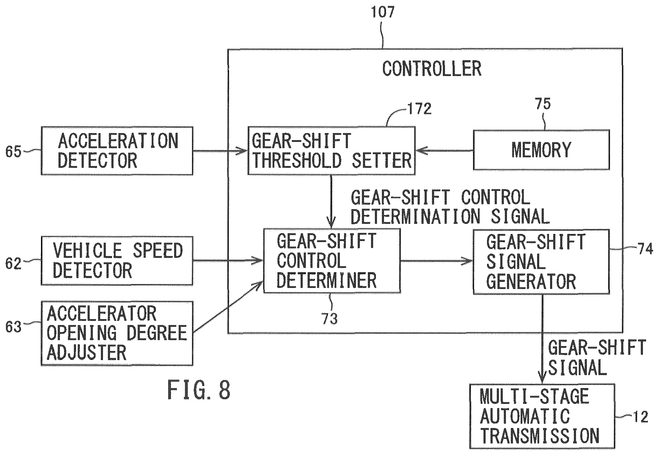

FIG. 8 is a block diagram of the controller 107 in this variation. The controller 107 has the same configuration to that of the controller 7 of the first embodiment except a point that the Z direction acceleration Az detected by the acceleration detector 65 is input, instead of the lean angular velocity detected by the lean detector 61, a point that a gear-shift determination map is set by a gear-shift threshold setter 172 using the Z direction acceleration Az detected by the acceleration detector 65, and a point that the controller 107 does not include a lean angle calculator that calculates a lean angle from a lean angular velocity. Therefore, part of the configuration of the controller 107 similar to corresponding part of the configuration of the controller 7 will not be described in detail.

Note that an acceleration threshold used for determining the Z direction acceleration Az generated in the vehicle 1 by the gear-shift threshold setter 172 is stored in a memory 75 of the controller 107.

If the Z direction acceleration Az detected by the acceleration detector 65 is larger than an acceleration threshold stored in the memory 75, the gear-shift threshold setter 172 sets a gear-shift determination map used when the gear-shift control determiner 73 performs determination to a gear-shift determination map (second gear-shift determination map) used in turning in a lean state. If the Z direction acceleration Az is larger than the acceleration threshold, the gear-shift threshold setter 172 sets the determination map to a gear-shift determination map (first gear-shift determination map) used in upright traveling.

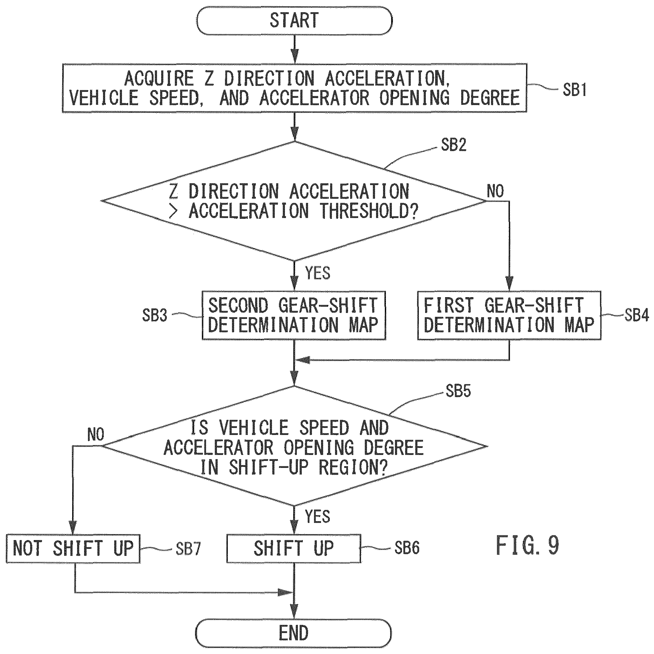

Next, gear-shift control by the controller 107 having the above described configuration will be described. FIG. 9 illustrates an operation flow of gear-shift control by the controller 107.

When the flow illustrated in FIG. 9 starts, the controller 107 first acquires data of a Z direction acceleration Az detected by the acceleration detector 65, vehicle speed of the vehicle 1 detected by the vehicle speed detector 62, and an accelerator opening degree output from the accelerator opening degree adjuster 63 (Step SB1).

If the Z direction acceleration Az detected by the acceleration detector 65 is larger than an acceleration threshold stored in the memory 75 (YES in Step SB2), the gear-shift threshold setter 172 of the controller 107 sets a gear-shift determination map used when the gear-shift control determiner 73 performs determination to a gear-shift determination map (second gear-shift determination map) used in turning in a lean state (Step SB3). If the Z direction acceleration Az is the acceleration threshold or less (NO in Step SB2), the gear-shift threshold setter 172 sets the determination map to a gear-shift determination map (first gear-shift determination map) in upright traveling (Step SB4).

Note that the first gear-shift determination map and the second gear-shift determination map are similar to the first gear-shift determination map and the second gear-shift determination map in the first embodiment, respectively, and therefore, detail description thereof will be omitted.

Steps SB5, SB6, and SB7 to which the process proceeds after the gear-shift determination map is set in Steps SB3 and SB4 are similar to Steps SA6, SA7, and SA8 in the first embodiment, and therefore, detail description thereof will be omitted.

As described above, the controller 107 determines based on the Z direction acceleration Az generated in the vehicle 1 whether the vehicle 1 is turning in a lean state and sets a gear-shift determination map used when determination of gear-shift control is performed by the gear-shift control determiner 73 in accordance with a result of the determination.

Note that the Z direction acceleration Az described above changes depending on whether the vehicle 1 is turning in a lean state as described above. Accordingly, while the vehicle 1 is turning in a lean state, a rolling resistance of the rear wheel 4 of the vehicle 1 is increased, as compared to a case where the vehicle 1 is traveling in an upright state. Therefore, the Z direction acceleration Az is a physical quantity related to the rolling resistance of the rear wheel 4 of the vehicle 1. In a case where the vehicle 1 is turning in a lean state, the lean angle in the first embodiment is large, as compared to a lean angle in upright traveling of the vehicle 1, and therefore, the lean angle is also a physical quantity related to the rolling resistance of the rear wheel 4 of the vehicle 1.

As described above, reduction in a driving force transferred to the rear wheel 4 while the vehicle 1 is turning in a lean state can be suppressed by changing a timing of a shift-up of the plurality of gear stages in the multi-stage automatic transmission 12, based on a physical quantity related to the rolling resistance of the rear wheel 4 of the vehicle 1. That is, in a case where the vehicle 1 turns in a lean state and the rolling resistance of the rear wheel 4 is increased, the driving force transferred from the engine unit 10 to the rear wheel 4 can be made less likely to be reduced by a shift-up of the plurality of gear stages in the multi-stage automatic transmission 12.

Accordingly, while the vehicle 1 is turning in a lean state, a posture change occurring in the vehicle 1 due to a shift-up of the plurality of gear stages in the multi-stage automatic transmission 12 can be reduced. Thus, the vehicle 1 that has a small posture change in turning and can be easily operated by a driver can be provided.

### (Second Variation of First Embodiment)

In the first embodiment and the first variation described above, a timing of a shift-up of the plurality of gear stages in the multi-stage automatic transmission 12 is changed based on a physical quantity related to a rolling resistance of the rear wheel 4 of the vehicle 1. Alternatively, if the rolling resistance is larger than a predetermined value, a shift-up of the plurality of gear stages in the multi-stage automatic transmission 12 may be inhibited.

Specifically, a controller 207 uses a lean angle as a physical quantity related to a rolling resistance and, if the lean angle is larger than a lean angle threshold (predetermined value), the controller 207 inhibits a shift-up in the multi-stage automatic transmission 12.

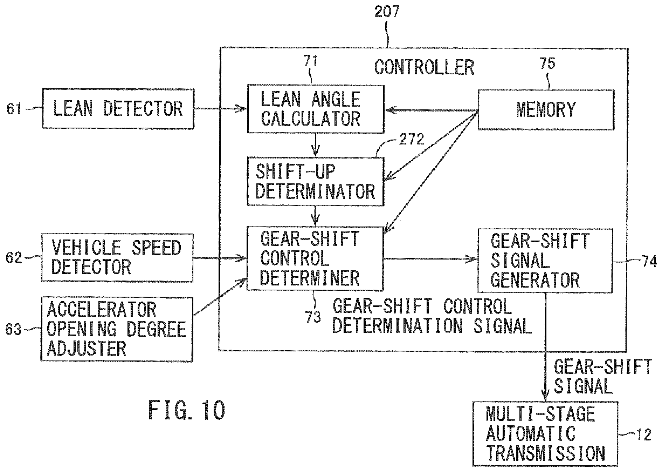

As illustrated in FIG. 10, the controller 207 includes a lean angle calculator 71, a shift-up determinator 272, a gear-shift control determiner 73, and a gear-shift signal generator 74. Configurations of the lean angle calculator 71, the gear-shift control determiner 73, and the gear-shift signal generator 74 are similar to the configurations of the lean angle calculator 71, the gear-shift control determiner 73, and the gear-shift signal generator 74 in the first embodiment, respectively, and therefore, will not be described in detail.

If a lean angle calculated by the lean angle calculator 71 is larger than a lean angle threshold, the shift-up determinator 272 generates a shift-up inhibiting signal for inhibiting a shift-up in the multi-stage automatic transmission 12 and outputs the shift-up inhibiting signal to the gear-shift control determiner 73. When the shift-up inhibiting signal is input, the gear-shift control determiner 73 does not output a gear-shift control determination signal or generates and outputs a gear-shift control determination signal for not performing a shift-up.

As described above, if a lean angle of the vehicle 1 is larger than a lean angle threshold, a shift-up in the multi-stage automatic transmission 12 is inhibited.

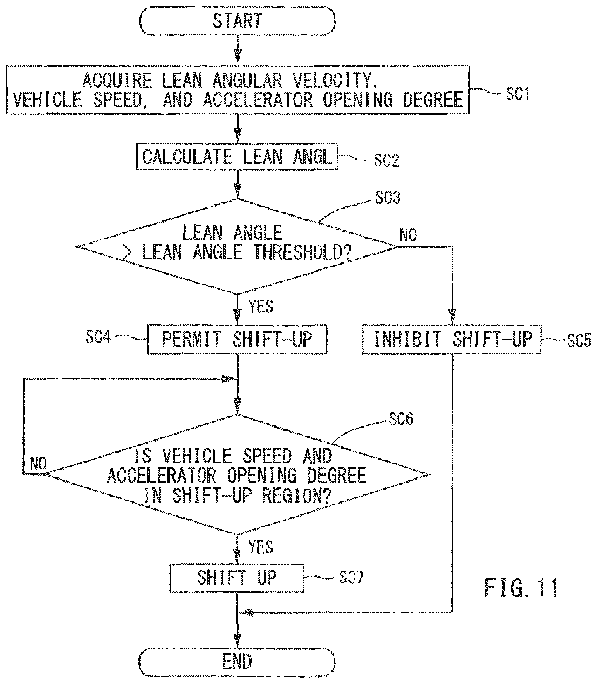

Next, gear-shift control by the controller 207 having the above described configuration will be described. FIG. 11 illustrates an operation flow of gear-shift control by the controller 207.

When the flow illustrated in FIG. 11 starts, the controller 207 first acquires each of data of a lean angular velocity detected by the lean detector 61, vehicle speed of the vehicle 1 detected by the vehicle speed detector 62, and an accelerator opening degree output from the accelerator opening degree adjuster 63 (Step SC1).

The lean angle calculator 71 of the controller 207 calculates a lean angle of the vehicle 1 from the acquired lean angular velocity (Step SC2). If the lean angle calculated by the lean angle calculator 71 is larger than a lean angle threshold stored in the memory 75 (YES in Step SC3), the shift-up determinator 272 outputs a shift-up inhibiting signal for inhibiting a shift-up. When the shift-up inhibiting signal is input, the gear-shift control determiner 73 does not output a gear-shift control determination signal or generates and outputs a gear-shift control determination signal for not performing a shift-up (Step SC5). Accordingly, a shift-up of the plurality of gear stages in the multi-stage automatic transmission 12 is inhibited. Thereafter, the controller 207 terminates gear-shift control in accordance with this flow.

On the other hand, if the lean angle is the lean angle threshold or less (NO in Step SC3), the shift-up determinator 272 does not output a shift-up inhibiting signal or generates and outputs a signal for permitting a shift-up (Step SC4). Thereafter, the process proceeds to Step SC6, and the gear-shift control determiner 73 determines whether the vehicle speed and the accelerator opening degree have changed to a shift-up region on a gear-shift determination map stored in the memory 75. Note that this determination is similar to the determination in Step SA6 in the first embodiment, and therefore, will not be described in detail.

In Step SC6, if the gear-shift control determiner 73 determines that the vehicle speed and the accelerator opening degree have changed to a shift-up region on a gear-shift determination map (YES in Step SC6), the gear-shift control determiner 73 generates and outputs a gear-shift control determination signal of a shift-up. The gear-shift signal generator 74 generates a gear-shift signal of a shift-up, based on the gear-shift control determination signal, and outputs the gear-shift signal to the multi-stage automatic transmission 12. Thus, a gear-shift for shifting up the plurality of gear stages is performed in the multi-stage automatic transmission 12.

On the other hand, in Step SC6, if the gear-shift control determiner 73 determines that the vehicle speed and the accelerator opening degree have not changed to a shift-up region on a gear-shift determination map (NO in Step SC6), the gear-shift control determiner 73 does not output a gear-shift control determination signal and repeats the determination operation of Step SC6.

As described above, if the lean angle of the vehicle 1 is larger than the lean angle threshold, the controller 207 inhibits a shift-up of the plurality of gear stages in the multi-stage automatic transmission 12. Thus, while the vehicle 1 is turning in a lean state, change of the driving force transferred to the rear wheel 4 due to a shift-up of the plurality of gear stages in the multi-stage automatic transmission 12 can be suppressed. Accordingly, while the vehicle 1 is turning in a lean state, a posture change occurring in the vehicle 1 due to a shift-up of the plurality of gear-shifts in the multi-stage automatic transmission 12 can be reduced.

Note that the lean angle is a physical quantity related to the rolling resistance of the rear wheel 4 of the vehicle 1 as described above. Accordingly, the controller 207 may be configured to, if the rolling resistance of the rear wheel 4 of the vehicle 1 is larger than a predetermined value, inhibit a shift-up of the plurality of gear stages in the multi-stage automatic transmission 12.

As described above, reduction in the driving force transferred to the rear wheel 4 while the vehicle 1 is turning in a lean state can be suppressed by inhibiting a shift-up of the plurality of gear stages in the multi-stage automatic transmission 12, based on a physical quantity related to a rolling resistance of the rear wheel 4 of the vehicle 1. That is, in a case where the vehicle 1 turns in a lean state and the rolling resistance of the rear wheel 4 is increased, reduction in the driving force transferred from the engine unit 10 to the rear wheel 4 due to a shift-up of the plurality of gear stages in the multi-stage automatic transmission 12 can be made less likely to occur.

Accordingly, while the vehicle 1 is turning in a lean state, a posture change occurring in the vehicle 1 due to a shift-up of the plurality of gear stages in the multi-stage automatic transmission 12 can be reduced. Thus, the vehicle 1 that has a small posture change in turning and can be easily operated by a driver can be provided.

### (Second Embodiment)

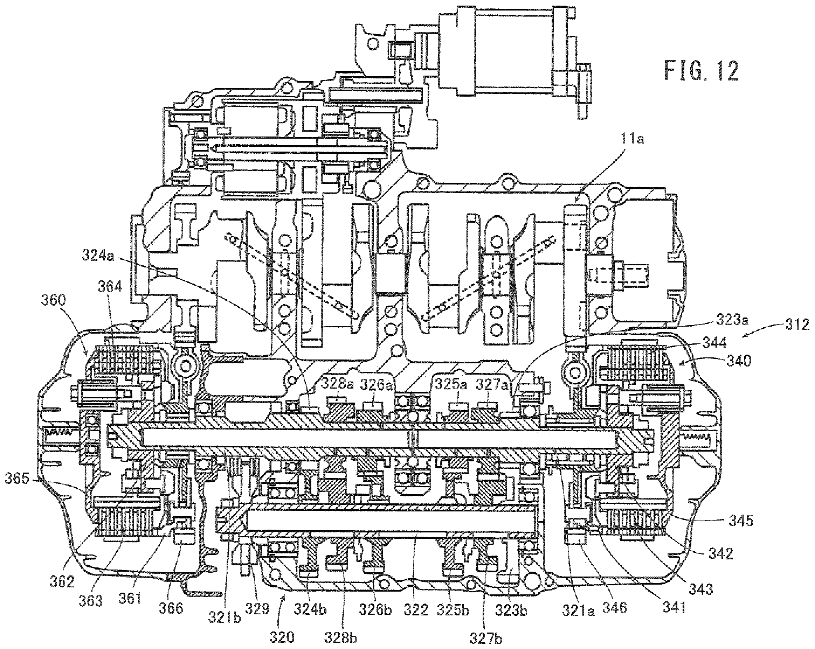

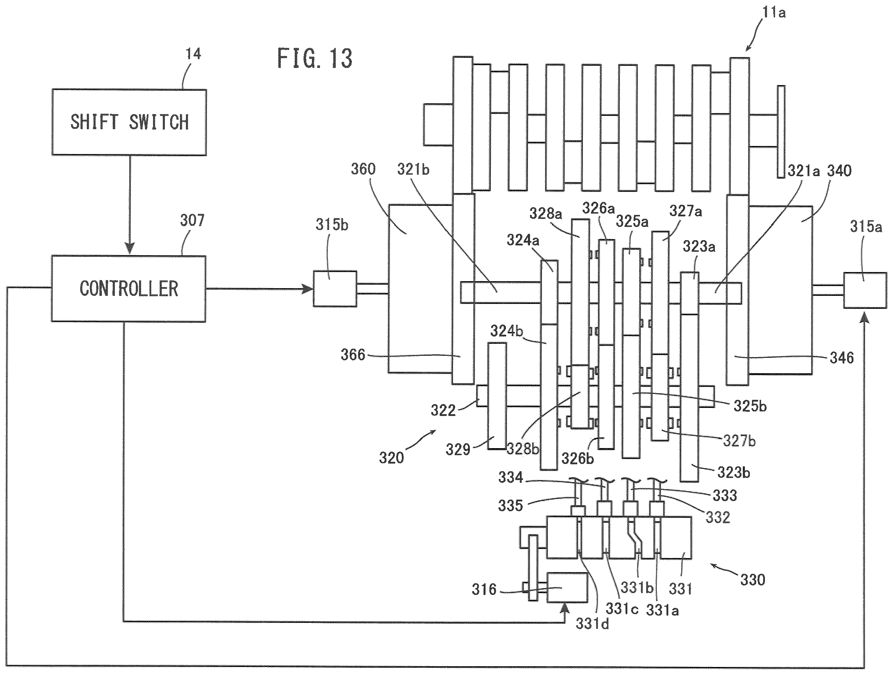

FIG. 12 illustrates a schematic configuration of a multi-stage automatic transmission 312 of a vehicle according to a second embodiment. For explanation, FIG. 13 schematically illustrates the configuration of the multi-stage automatic transmission 312. The multi-stage automatic transmission 312 of this embodiment is different from the configuration of the first embodiment in including two clutches of a first clutch 340 and a second clutch 360. In the following description, components similar to those of the first embodiment are denoted by the same reference characters and will not be described again, and only components different from those of the first embodiment will be described.

The multi-stage automatic transmission 312 includes a plurality of friction driving clutches, and achieves smooth gear-shift by alternately performing power transfer in odd-number stages and in even-number stages with the first clutch 340 and the second clutch 360. The multi-stage automatic transmission 312 includes a transmission mechanism 320, the first clutch 340, the second clutch 360, and a shift mechanism.

The transmission mechanism 320 is connected to a crankshaft 11a of an engine 11. The transmission mechanism 320 changes a torque transferred from the crankshaft 11a to a predetermined torque, and outputs the predetermined torque.

The first clutch 340 and the second clutch 360 are configured to transfer rotation of the crankshaft 11a to the transmission mechanism 320. That is, the first clutch 340 and the second clutch 360 are configured to switch between transfer and non-transfer of rotation of the crankshaft 11a to the transmission mechanism 320.

The first clutch 340 is driven by a first clutch actuator 315a described later. The first clutch 340 transfers a driving force at odd-number stages (i.e., first-speed stage, third-speed stage, and fifth-speed stage) of the transmission mechanism 320.

The second clutch 360 is driven by a second clutch actuator 315b described later. The second clutch 360 transfers a driving force at even-number stages (i.e., second-speed stage, fourth-speed stage, and six-speed stage) of the transmission mechanism 320.

The shift mechanism performs a gear-shift of the transmission mechanism 320 through a sequential shift mechanism 330 described later, and retains a gear stage selected by the transmission mechanism 320 until next gear-shift is performed by the transmission mechanism 320. A configuration of the shift mechanism is similar to the configuration of the shift mechanism 50 of the first embodiment, and thus, will not be described in detail.

As described above, a driving force is transferred to the transmission mechanism 320 of the multi-stage automatic transmission 312 from the engine 11 through the first clutch 340 or the second clutch 360.

A configuration of the multi-stage automatic transmission 312 including the transmission mechanism 320, the first clutch 340, the second clutch 360, and the shift mechanism will now be described in detail.

Each of the first clutch 340 and the second clutch 360 is, for example, a multiplate friction clutch. The first clutch 340 includes a bottomed cylindrical clutch housing 341, a bottomed cylindrical clutch boss 342, a plurality of friction plates 343 and clutch plates 344 that are friction discs, a pressure plate 345, and an input gear 346. The second clutch 360 includes a bottomed cylindrical clutch housing 361, a bottomed cylindrical clutch boss 362, a plurality of friction plates 363 and clutch plates 364 that are friction discs, a pressure plate 365, and an input gear 366.

The first clutch 340 and the second clutch 360 have the same configuration. The configurations of the first clutch 340 and the second clutch 360 is similar to the configuration of the clutch 40 in the first embodiment. Thus, the configuration of the first clutch 340 and the second clutch 360 will not be described in detail.

The clutch boss 342 of the first clutch 340 is coupled to an end portion of a first main shaft 321a described later in the transmission mechanism 320. A clutch housing 341 of the first clutch 340 is connected to the input gear 346 that meshes with a gear provided on the crankshaft 11a. The plurality of friction plates 343 are attached to the inner peripheral surface of the clutch housing 341. The plurality of clutch plates 344 are attached to the outer peripheral surface of the clutch boss 342. The friction plates 343 and the clutch plates 344 are engaged or disengaged to thereby enable the first clutch 340 to switch between transfer and non-transfer of rotation of the crankshaft 11a to the first main shaft 321a of the transmission mechanism 320.

The clutch boss 362 of the second clutch 360 is coupled to an end portion of a second main shaft 321b described later in the transmission mechanism 320. A clutch housing 361 of the second clutch 360 is connected to the input gear 366 that meshes with a gear provided on the crankshaft 11a. The plurality of friction plates 363 are attached to the inner peripheral surface of the clutch housing 361. The plurality of clutch plates 364 are attached to the outer peripheral surface of the clutch boss 362. The friction plates 363 and the clutch plates 364 are engaged or disengaged to thereby enable the second clutch 360 to switch between transfer and non-transfer of rotation of the crankshaft 11a to the second main shaft 321b of the transmission mechanism 320.

Engagement and disengagement between the friction plates 343 and the clutch plates 344 in the first clutch 340 are performed by driving the first clutch actuator 315a as illustrated in FIG. 13. Engagement and disengagement between the friction plates 363 and the clutch plates 364 in the second clutch 360 are performed by driving the second clutch actuator 315b as illustrated in FIG. 13.

The transmission mechanism 320 is a multistep transmission mechanism. The transmission mechanism 320 includes the first main shaft 321a, the second main shaft 321b, the output shaft 322, a plurality of driving gears, a plurality of driven gears, and the sequential shift mechanism 330 (see FIG. 13).

The first main shaft 321a and the second main shaft 321b are disposed on the same axis such that one end of the first main shaft 321a faces one end of the second main shaft 321b. The first main shaft 321a and the second main shaft 321b are rotatable independently of each other. The other end of the first main shaft 321a is coupled to a clutch boss 342 of the first clutch 340. The other end of the second main shaft 321b is coupled to a clutch boss 362 of the second clutch 360.

The first main shaft 321a is provided with, as part of the plurality of driving gears, a first-speed fixing gear 323a, a first spline gear 325a, and a fifth-speed gear 327a constituting each of odd-number stages including a first-speed gear, a third-speed gear, and a fifth-speed gear. The first-speed fixing gear 323a, the first spline gear 325a, and the fifth-speed gear 327a are arranged on the first main shaft 321a in the order of the first-speed fixing gear 323a, the fifth-speed gear 327a, and the first spline gear 325a from an end portion to which the first clutch 340 is connected.

The first-speed fixing gear 323a is fixed to the first main shaft 321a, and rotates together with the first main shaft 321a. The first-speed fixing gear 323a meshes with a first-speed gear 323b described later disposed on the output shaft 322.

The fifth-speed gear 327a is rotatably attached on the first main shaft 321a with movement in the axial direction of the first main shaft 321a restricted. The fifth-speed gear 327a meshes with a third spline gear 327b described later of the output shaft 322.

The first spline gear 325a is attached on the first main shaft 321a to be rotatable together with the first main shaft 321a and movable along the axial direction of the first main shaft 321a. The first spline gear 325a meshes with a third-speed gear 325b of the output shaft 322.

The first spline gear 325a is connected to a shift fork 333 described later of the sequential shift mechanism 330, and moves in the axial direction on the first main shaft 321a by movement of the shift fork 333. The first spline gear 325a moves on the first main shaft 321a as described above to be thereby connected to the fifth-speed gear 327a. Accordingly, the fifth-speed gear 327a can rotate together with the first main shaft 321a.

The second main shaft 321b is provided with, as part of the plurality of driving gears, a second-speed fixing gear 324a, a second spline gear 326a, and a sixth-speed gear 328a constituting each of even-number stages including a second-speed gear, a fourth-speed gear, and a sixth-speed gear. The second-speed fixing gear 324a, the second spline gear 326a, and the sixth-speed gear 328a are arranged on the second main shaft 321b in the order of the second-speed fixing gear 324a, the sixth-speed gear 328a, and the second spline gear 326a from an end portion to which the second clutch 360 is connected.

The second-speed fixing gear 324a is fixed to the second main shaft 321b, and rotates together with the second main shaft 321b. The second-speed fixing gear 324a meshes with a second-speed gear 324b described later disposed on the output shaft 322.

The sixth-speed gear 328a is rotatably attached on the second main shaft 321b with movement in the axial direction of the second main shaft 321b restricted. The sixth-speed gear 328a meshes with a fourth spline gear 328b described later of the output shaft 322.

The second spline gear 326a is attached on the second main shaft 321b to be rotatable together with the second main shaft 321b and movable along the axial direction of the second main shaft 321b. The second spline gear 326a meshes with the fourth-speed gear 326b of the output shaft 322.

The second spline gear 326a is connected to a shift fork 334 described later of the sequential shift mechanism 330, and moves in the axial direction on the second main shaft 321b by movement of the shift fork 334. The second spline gear 326a moves on the second main shaft 321b as described above to be thereby connected to the sixth-speed gear 328a. Accordingly, the sixth-speed gear 328a can rotate together with the second main shaft 321b.

The output shaft 322 is provided with the first-speed gear 323b, the third spline gear 327b, the third-speed gear 325b, the fourth-speed gear 326b, the fourth spline gear 328b, the second-speed gear 324b, and a sprocket 329 in this order from a side close to the first clutch 340. The first-speed gear 323b, the third-speed gear 325b, the fourth-speed gear 326b, and the second-speed gear 324b are provided on the output shaft 322 to be rotatable with respect to the output shaft 322 with movement along the axial direction of the output shaft 322 restricted.

The third spline gear 327b and the fourth spline gear 328b are attached on the output shaft 322 to rotate together with the output shaft 322 and to be movable along the axial direction of the output shaft 322. The third spline gear 327b meshes with the fifth-speed gear 327a of the first main shaft 321a. The fourth spline gear 328b meshes with the sixth-speed gear 328a of the second main shaft 321b.

The third spline gear 327b is connected to a shift fork 332 described later of the sequential shift mechanism 330, and is caused to move on the output shaft 322 along the axial direction by movement of the shift fork 332. With this movement on the output shaft 322, the third spline gear 327b is connected to the first-speed gear 323b or the third-speed gear 325b. Accordingly, the first-speed gear 323b or the third-speed gear 325b is allowed to rotate together with the output shaft 322.

The fourth spline gear 328b is connected to a shift fork 335 described later of the sequential shift mechanism 330, and is caused to move on the output shaft 322 along the axial direction by movement of the shift fork 335. With this movement on the output shaft 322, the fourth spline gear 328b is connected to the second-speed gear 324b or the fourth-speed gear 326b. Accordingly, the second-speed gear 324b or the fourth-speed gear 326b is allowed to rotate together with the output shaft 322.

The sprocket 329 rotates together with the output shaft 322. A chain, not shown, is attached to the sprocket 329. That is, rotation of the output shaft 322 is output through the sprocket 329 and the chain.

The first spline gear 325a, the second spline gear 326a, the third spline gear 327b, and the fourth spline gear 328b function as transmission gears, and also function as dog selectors. The first spline gear 325a, the second spline gear 326a, the third spline gear 327b, and the fourth spline gear 328b move along the axial direction on the first main shaft 321a, the second main shaft 321b, or the output shaft 322 to be thereby connected to the transmission gears adjacent to these gears in the axial direction by a dog mechanism, not shown. The dog mechanism is similar to a configuration of a known dog mechanism (e.g., Japanese Patent Application Publication No. 2010-133555), and thus, will not be described in detail.

For example, in a case where the gear stage of the transmission mechanism 320 is a first speed, the first spline gear 325a on the first main shaft 321a meshes with the third-speed gear 325b on the output shaft 322. The third spline gear 327b on the output shaft 322 is connected to the first-speed gear 323b. Accordingly, the first-speed gear 323b is fixed to the output shaft 322 through the third spline gear 327b to be rotatable together with the output shaft 322. Thus, rotation is transferred from the first main shaft 321a to the output shaft 322 through the first-speed gear 323b meshing with the first-speed fixing gear 323a fixed to the first main shaft 321a. At this time, the third-speed gear 325b meshing with the first spline gear 325a on the first main shaft 321a rotates with respect to the output shaft 322.

In a case where the gear stage of the transmission mechanism 320 is a second speed, the second spline gear 326a on the second main shaft 321b meshes with the fourth-speed gear 326b on the output shaft 322. The fourth spline gear 328b on the output shaft 322 is connected to the second-speed gear 324b. Accordingly, the second-speed gear 324b is fixed to the output shaft 322 through the fourth spline gear 328b to be rotatable together with the output shaft 322. Thus, rotation is transferred from the second main shaft 321b to the output shaft 322 through the second-speed gear 324b meshing with the second-speed fixing gear 324a fixed to the second main shaft 321b. At this time, the fourth-speed gear 326b meshing with the second spline gear 326a on the second main shaft 321b rotates with respect to the output shaft 322.

In a case where the gear stage of the transmission mechanism 320 is a third speed, the first spline gear 325a on the first main shaft 321a meshes with the third-speed gear 325b on the output shaft 322. The third spline gear 327b on the output shaft 322 is connected to the third-speed gear 325b. Accordingly, the third-speed gear 325b is fixed to the output shaft 322 through the third spline gear 327b to be rotatable together with the output shaft 322. Thus, rotation is transferred from the first main shaft 321a to the output shaft 322 through the third-speed gear 325b meshing with the first spline gear 325a that rotates together with the first main shaft 321a.

In a case where the gear stage of the transmission mechanism 320 is a fourth speed, the second spline gear 326a on the second main shaft 321b is engaged with the fourth-speed gear 326b on the output shaft 322. The fourth spline gear 328b on the output shaft 322 is connected to the fourth-speed gear 326b. Accordingly, the fourth-speed gear 326b is fixed to the output shaft 322 through the fourth spline gear 328b to be rotatable together with the output shaft 322. Thus, rotation is transferred from the second main shaft 321b to the output shaft 322 through the fourth-speed gear 326b meshing with the second spline gear 326a that rotates together with the second main shaft 321b.

In a case where the gear stage of the transmission mechanism 320 is a fifth speed, the first spline gear 325a on the first main shaft 321a is connected to the fifth-speed gear 327a. Accordingly, the fifth-speed gear 327a is fixed to the first main shaft 321a through the first spline gear 325a to be rotatable together with the first main shaft 321a. The third spline gear 327b on the output shaft 322 meshes with the fifth-speed gear 327a on the first main shaft 321a at a position at which the third spline gear 327b is connected to none of the first-speed gear 323b and the third-speed gear 325b. Thus, rotation is transferred from the first main shaft 321a to the output shaft 322 through the fifth-speed gear 327a connected to the first spline gear 325a that rotates together with the first main shaft 321a and through the third spline gear 327b on the output shaft 322.

In a case where the gear stage of the transmission mechanism 320 is a sixth speed, the second spline gear 326a on the second main shaft 321b is connected to the sixth-speed gear 328a. Accordingly, the sixth-speed gear 328a is fixed to the second main shaft 321b through the second spline gear 326a to be rotatable together with the second main shaft 321b. The fourth spline gear 328b on the output shaft 322 meshes with the sixth-speed gear 328a on the second main shaft 321b at a position at which the fourth spline gear 328b is connected to none of the second-speed gear 324b and the fourth-speed gear 326b. Thus, rotation is transferred from the second main shaft 321b to the output shaft 322 through the sixth-speed gear 328a connected to the second spline gear 326a that rotates together with the second main shaft 321b and through the fourth spline gear 328b on the output shaft 322.

The sequential shift mechanism 330 includes a shift cam 331 and the shift forks 332 through 335. As illustrated in FIG. 13, cam grooves 331a through 331d are formed on the outer peripheral surface of the shift cam 331 of the sequential shift mechanism 330. The cam grooves 331a through 331d are arranged along the axial direction of the shift cam 331 and each extend circumferentially on the outer peripheral surface of the shift cam 331. Each of the cam grooves 331a through 331d is disposed on the outer peripheral surface of the shift cam 331 such that the position in the axial direction of the shift cam 331 changes in accordance with the position in the circumferential direction of the shift cam 331. One end of each of the shift forks 332 through 335 is located on an associated one of the cam grooves 331a through 331d. Configurations of the cam grooves 331a through 331d of this embodiment are similar to those of known cam grooves (e.g., Japanese Patent Application Publication No. 2010-133555), and thus, will not be described in detail.

The other end of the shift fork 332 is connected to the third spline gear 327b. The other end of the shift fork 333 is connected to the first spline gear 325a. The other end of the shift fork 334 is connected to the second spline gear 326a. The other end of the shift fork 335 is connected to the fourth spline gear 328b. Accordingly, when the shift forks 332 through 335 move in the axial direction along the cam grooves 331a through 331d of the shift cam 331, the first spline gear 325a, the second spline gear 326a, the third spline gear 327b, and the fourth spline gear 328b also move in the axial direction. A driving force in a rotation direction is applied to the shift cam 331 by a shift actuator 316.

As described above, with the movement of the first spline gear 325a, the second spline gear 326a, the third spline gear 327b, and the fourth spline gear 328b in accordance with the movement of the shift forks 332 through 335, changing to each gear stage is performed in the transmission mechanism 320 as described above.

In the multi-stage automatic transmission 312 having the configuration described above, in changing the gear stages in response to an operation of a shift switch 14 by a driver, the shift actuator 316, the first clutch actuator 315a, and the second clutch actuator 315b are controlled and driven by the controller 307. That is, the controller 307 outputs control signals to the shift actuator 316, the first clutch actuator 315a, and the second clutch actuator 315b.

The controller 307 disengages one of the first clutch 340 or the second clutch 360, and then, changes the gear stage on one of the first main shaft 321a or the second main shaft 321b connected to the disengaged clutch. Thereafter, the controller 307 causes the disengaged one of the first clutch 340 or the second clutch 360 to transition from the disengaged state to an engaged state through a semi-clutch state, while causing the engaged one of the first clutch 340 or the second clutch 360 to transition from the engaged state to the disengaged state through the semi-clutch state.

As one example of a gear-shift of the multi-stage automatic transmission 312, a case of shifting up the gear stage from a second speed to a third speed will be described. In this embodiment, the vehicle includes the shift switch 14 (gear-shift operator) for allowing a driver to instruct changing of the gear stages to the multi-stage automatic transmission 312.

When the driver of the vehicle operates the shift switch 14 to perform a shift-up from the second speed to the third speed, the controller 307 controls driving of the first clutch actuator 315a so as to disengage the first clutch 340. Accordingly, torque transfer from the crankshaft 11a to the first main shaft 321a by way of the first clutch 340 is blocked. In this case, a torque of the crankshaft 11a is transferred to the output shaft 322 through the second clutch 360, the second main shaft 321b, the second-speed fixing gear 324a, the second-speed gear 324b, and the fourth spline gear 328b.

Next, the controller 307 controls driving of the shift actuator 316 to thereby cause the shift cam 331 to rotate by a predetermined angle. Accordingly, the shift fork 332 moves in the axial direction and connects the third spline gear 327b on the output shaft 322 to the third-speed gear 325b. Thus, the first main shaft 321a and the output shaft 322 are connected to each other to enable torque transfer through the first spline gear 325a, the third-speed gear 325b, and the third spline gear 327b. It should be noted that since the first clutch 340 is disengaged as described above, a torque of the crankshaft 11a is not transferred from the first main shaft 321a to the output shaft 322.

The controller 307 controls driving of the first clutch actuator 315a and the second clutch actuator 315b to thereby cause the first clutch 340 to transition from the disengaged state to the engaged state through the semi-clutch state, while causing the second clutch 360 to transition from the engaged state to the disengaged state through the semi-clutch state.

In this case, a torque transferred from the crankshaft 11a to the output shaft 322 through the first clutch 340, the first main shaft 321a, the first spline gear 325a, the third-speed gear 325b, and the third spline gear 327b gradually increases. On the other hand, a torque transferred from the crankshaft 11a to the output shaft 322 through the second clutch 360, the second main shaft 321b, the second-speed fixing gear 324a, the second-speed gear 324b, and the fourth spline gear 328b gradually decreases, and becomes zero when the second clutch 360 becomes disengaged.

As described above, in the multi-stage automatic transmission 312 of this embodiment, by changing the gear stages by using two clutches of the first clutch 340 and the second clutch 360, it is possible to prevent a torque from abruptly changing in changing the gear stages.

In the multi-stage automatic transmission 312 of this embodiment, at least one of the first clutch 340 or the second clutch 360 is always in the engaged state, and thus, a decrease in a driving force by clutch disengagement as in the multi-stage automatic transmission 12 of the first embodiment does not occur. However, in the multi-stage automatic transmission 312, the driving force decreases by shifting up the plurality of gear stages, and thus, a lean angle of the vehicle turning in a lean state is increased. As described above, a posture of the vehicle changes due to the shift-up of the plurality of gear stages in the multi-stage automatic transmission 312.

The shift-down is a gear-shift of changing the gear stages such that the gear-shift ratio increases. The shift-up is a gear-shift of changing the gear stages such that the gear-shift ratio decreases.

In this embodiment, the controller 307 shifts down the plurality of gear stages in the multi-stage automatic transmission 312 with or without an operation of the shift switch 14 when the vehicle stops. That is, the controller 307 of this embodiment performs changing of the gear stages of the multi-stage automatic transmission 312 in accordance with an operation of the shift switch 14 and, when the vehicle stops, shifts down the plurality of gear stages in the multi-stage automatic transmission 312 with or without an operation of the shift switch 14.

The controller 307 of the multi-stage automatic transmission 312 having the configuration of this embodiment has a configuration similar to that of the controller 7 of the first embodiment. That is, the controller 307 includes the lean angle calculator 71, the gear-shift threshold setter 72, the gear-shift control determiner 73, the gear-shift signal generator 74, and the memory 75. Configurations of these components are similar to those in the first embodiment, and thus, will not be described in detail.

In a manner similar to that of the controller 7 of the first embodiment, the controller 307 of this embodiment delays a timing of a shift-up of the plurality of gear stages in the multi-stage automatic transmission 312 if the lean angle of the vehicle is larger than a lean angle threshold, that is, while the vehicle is turning in a lean state, as compared to a timing of a shift-up in a case where the lean angle of the vehicle is the lean angle threshold or less, that is, while the vehicle is traveling in an upright state.

Accordingly, while the vehicle is turning in a lean state, a posture change occurring in the vehicle due to a shift-up of the plurality of gear stages in the multi-stage automatic transmission 312 can be reduced.

Note that, as in the first variation of the first embodiment, the controller 307 may be configured to delay a timing of a shift-up of the plurality of gear stages in the multi-stage automatic transmission 312 if a Z direction acceleration of the vehicle is larger than an acceleration threshold, as compared to a timing of a shift-up in a case where the Z direction acceleration is the acceleration threshold or less.

As in the second variation of the first embodiment, the controller 307 may be configured to inhibit a shift-up of the plurality of gear stages in the multi-stage automatic transmission 312 in a case where a rolling resistance of a rear wheel of the vehicle is larger than a predetermined value.

### (Other Embodiments)

The embodiments of the present invention have been described above, but the above embodiments are merely examples for carrying out the invention. Thus, the present invention is not limited to the embodiments, and the embodiments may be modified as necessary within a range not departing from the scope of the claims.

In the embodiment described above, each of the controllers 7, 107, 207, and 307 detects whether the vehicle 1 is turning in a lean state using the lean angle or the Z direction acceleration of the vehicle 1. Alternatively, the controller may be configured to detect whether the vehicle is turning in a lean state using some other parameter related to a behavior of the vehicle.

In the embodiments described above, each of the controllers 7, 107, 207, and 307 controls driving of the multi-stage automatic transmission 12, based on the vehicle speed and the accelerator opening degree of the vehicle 1. Alternatively, the controller may be configured to control driving of the multi-stage automatic transmission, based on values related to the vehicle speed and the accelerator opening degree of the vehicle. The value related to the accelerator opening degree includes not only the accelerator opening degree but also a value determined by the accelerator opening degree. For example, the value related to the accelerator opening degree includes a throttle opening degree, a request torque, or the like determined by the accelerator opening degree. The throttle opening degree and the request torque may be calculated from an accelerator opening degree by an accelerator opening degree adjuster, and may be calculated from the accelerator opening degree by the controller.

In the first embodiment, the controller 7 automatically performs changing of the controller 307 performs changing of the gear stages of the multi-stage automatic transmission 312 in accordance with an operation of the shift switch 14.

Alternatively, the controller may be configured to perform changing of the plurality of gear stages in the multi-stage automatic transmission described in the first embodiment in accordance with an operation of the shift switch. Also in this case, the controller shifts down the plurality of gear stages in the multi-stage automatic transmission with or without an operation of the shift switch when the vehicle stops. The controller may be configured to permit a shift-up or a shift-down of the plurality of gear stages in the multi-stage automatic transmission in accordance with an operation of the shift switch while the vehicle is turning in a lean state.

In the first embodiment, each of the controller 7 and the controller 207 calculates a lean angle by the lean angle calculator 71 from a lean angular velocity detected by the lean detector 61. Alternatively, the controller may be configured to calculate a lean angle, based on a difference between rotation speed of the front wheel and rotation speed of the rear wheel. In the manner described above, the lean angle of the vehicle can be easily calculated by calculating the lean angle.

In the embodiments described above, a driving force is transferred from the engine unit 10 to the rear wheel 4 of the vehicle 1. Alternatively, a driving force may be transferred from the engine unit to the front wheel of the vehicle. In this case, the multi-stage automatic transmission changes the driving force transferred from an engine to the front wheel. In this case, the controller may be configured such that a rolling resistance of the front wheel to which the driving force is transferred is taken into consideration, as a rolling resistance of the wheels of the vehicle in performing a shift-up of the plurality of gear stages in the multi-stage automatic transmission.

In the embodiments described above, the vehicle 1 includes the engine 11 as a driving source. Alternatively, the driving source of the vehicle may be a motor. The driving source may be a hybrid system obtained by combining an engine and a motor.

In each of the embodiments described above, examples of the multi-stage automatic transmission are described. Alternatively, the multi-stage automatic transmission may be a transmission with any configuration as long as the transmission has a configuration including at least one clutch and a plurality of gear stages and capable of automatically changing the gear stages stepwise.

In the embodiments described above, the multi-stage automatic transmissions 12 and 312 are six-speed transmissions. Alternatively, the multi-stage automatic transmission may be a transmission for five speeds or less, or a transmission for seven or more speeds.

In the embodiments described above, the motorcycles have been described as examples of the vehicle. The vehicle, however, may be a vehicle other than a motorcycle, as long as the vehicle is a leaning vehicle including a multi-stage automatic transmission.

### REFERENCE SIGNS LIST

- 1: Vehicle (Leaning vehicle)
- 2: Vehicle body
- 3: Front wheel
- 4: Rear wheel
- 7, 107, 207, 307: Controller (gear-shift controller)
- 10: Engine unit
- 11: Engine (driving source)
- 11a: Crank shaft
- 12, 312: Multi-stage automatic transmission
- 15: Clutch actuator
- 16: Shift actuator
- 20, 320: Transmission mechanism
- 21: Main shaft
- 22: Output shaft
- 23: Driving gear
- 24: Driven gear
- 40: Clutch
- 46: Input gear
- 50: Shift mechanism
- 61: Lean detector
- 62: Vehicle speed detector (speed detector)
- 63: Accelerator opening degree adjuster
- 65: Acceleration detector
- 71: Lean angle calculator
- 72, 172: Gear-shift threshold setter
- 73: Gear-shift control determiner
- 74: Gear-shift signal generator
- 75: Memory
- 272: Shift-up determinator
- 315a: First clutch actuator
- 315b: Second clutch actuator
- 321a: First main shaft
- 321b: Second main shaft
- 322: Output shaft
- 323a: First-speed fixing gear
- 323b: First-speed gear
- 324a: Second-speed fixing gear
- 324b: Second-speed gear
- 325a: First spline gear
- 325b: Third-speed gear
- 326a: Second spline gear
- 326b: Fourth-speed gear
- 327a: Fifth-speed gear
- 327b: Third spline gear
- 328a: Sixth-speed gear
- 328b: Fourth spline gear
- 329: Sprocket
- 340: First clutch (clutch)
- 350: Shift mechanism
- 360: Second clutch (clutch)
- Az: Z direction acceleration

## Claims

1. A leaning vehicle (1) that is configured to lean leftward when turning to the left and to lean rightward when turning to the right, the leaning vehicle (1) comprising:
a vehicle body (2);
a plurality of wheels (3, 4) including a front wheel (3) and a rear wheel (4);
a driving source (11) configured to supply a driving force to at least one of the front wheel (3) or the rear wheel (4);
an accelerator opening degree adjuster (63) configured to adjust the driving force generated in the driving source (11) in accordance with an accelerator opening degree;
a speed detector (62) configured to detect vehicle speed of the leaning vehicle (1);
a gear-type multi-stage automatic transmission (12, 312) including a plurality of gear stages and a clutch (40, 340, 360), and configured to change the driving force transferred to at least one of the front wheel (3) or the rear wheel (4) from the driving source (11) by automatically changing the plurality of gear stages stepwise; and
a gear-shift controller (7, 107, 207, 307) configured to control changing of the plurality of gear stages in the multi-stage automatic transmission (12, 312), based on a value related to the accelerator opening degree and the vehicle speed,
wherein the gear-shift controller (7, 107, 207, 307) is configured to
shift up the gear stages of the multi-stage automatic transmission (12, 312) from the first gear stage to the second gear stage, in a case where the leaning vehicle (1) turns in a lean state in which the leaning vehicle (1) leans with respect to a vertical line of a road surface in a left direction or in a right direction about a rotation axis extending in a front-rear direction of the leaning vehicle as a center, when the vehicle speed at a time when the value related to the accelerator opening degree is a predetermined value exceeds a second vehicle speed threshold that is larger than a first vehicle speed threshold at which the gear stages of the multi-stage automatic transmission (12, 312) are shifted up from a first gear stage to a second gear stage in upright traveling of the leaning vehicle (1), or
shift up the gear stages of the multi-stage automatic transmission (12, 312) from the first gear stage to the second gear stage, in a case where the leaning vehicle (1) turns in the aforementioned lean state, when the value related to the accelerator opening degree at a time when the vehicle speed is a predetermined vehicle speed exceeds a second accelerator opening degree related threshold that is smaller than a first accelerator opening degree related threshold at which the gear stages of the multi-stage automatic transmission (12, 312) are shifted up from the first gear stage to the second gear stage in upright traveling of the leaning vehicle (1).

2. The leaning vehicle (1) according to claim 1,
wherein, while the leaning vehicle (1) is turning in the lean state, the gear-shift controller (7, 107, 207, 307) is configured to change the first vehicle speed threshold or the first accelerator opening degree related threshold, based on a physical quantity related to a rolling resistance of the wheels (3, 4).

3. The leaning vehicle (1) according to claim 2,
wherein the physical quantity related to the rolling resistance of the wheels (3, 4) includes at least one of a lean angle of the leaning vehicle (1) between the vertical line of the road surface and an up-down direction reference line of the leaning vehicle or an acceleration in an up-down shaft direction of the vehicle body (2) in a state where the leaning vehicle (1) is turning in the lean state.

4. The leaning vehicle (1) according to any one of claims 2 and 3,
wherein, while the leaning vehicle (1) is turning in the lean state, if the rolling resistance of the wheels (3, 4) is larger than a predetermined value, the gear-shift controller (7, 107, 207, 307) inhibits a shift-up of the plurality of gear stages.

5. The leaning vehicle (1) according to any one of claims 1 to 4,
wherein the gear-shift controller (7, 107, 207, 307)
includes reference data including the value related to the accelerator opening degree and the vehicle speed as parameters used for determining a timing of the shift-up from the first gear stage to the second gear stage in the multi-stage automatic transmission (12, 312) when the leaning vehicle (1) travels in an upright state, and
is configured to perform, when the leaning vehicle (1) turns in the lean state, changing of the plurality of gear stages in the multi-stage automatic transmission (12, 312) at a vehicle speed that is larger than the vehicle speed at the timing of the shift-up determined based on the reference data if the value related to the accelerator opening degree is a predetermined value, or at a smaller value than the value related to the accelerator opening degree at the timing of the shift-up determined based on the reference data if the vehicle speed is a predetermined vehicle speed.

## Patentansprüche

1. Ein Neigungsfahrzeug (1), das dazu konfiguriert ist, sich nach links zu neigen, wenn es nach links fährt, und sich nach rechts zu neigen, wenn es nach rechts fährt, wobei das Neigungsfahrzeug (1) folgende Merkmale aufweist:
einen Fahrzeugkörper (2);
eine Mehrzahl von Rädern (3, 4), die ein Vorderrad (3) und ein Hinterrad (4) umfassen;
eine Antriebsquelle (11), die dazu konfiguriert ist, dem Vorderrad (3) und/oder dem Hinterrad (4) eine Antriebskraft zuzuführen;
ein Beschleunigeröffnungsgradeinsteller (63), der dazu konfiguriert ist, die in der Antriebsquelle (11) erzeugte Antriebskraft gemäß einem Beschleunigeröffnungsgrad einzustellen;
einen Geschwindigkeitsdetektor (62), der dazu konfiguriert ist, eine Fahrzeuggeschwindigkeit des Neigungsfahrzeugs (1) zu detektieren;
ein Gangtyp-Mehrstufen-Automatikgetriebe (12, 312), das eine Mehrzahl von Gangstufen und eine Kupplung (40, 340, 360) umfasst und dazu konfiguriert ist, die von der Antriebsquelle (11) auf das Vorderrad (3) und/oder das Hinterrad (4) übertragene Antriebskraft durch ein automatisches Ändern der Mehrzahl von Gangstufen schrittweise ändern; und
eine Gangwechselsteuerung (7, 107, 307, 407), die dazu konfiguriert ist, die Änderung der Mehrzahl von Gangstufen in dem Mehrstufen-Automatikgetriebe (12, 312) auf der Basis eines Werts bezüglich des Beschleunigeröffnungsgrades und der Fahrzeuggeschwindigkeit zu steuern,
wobei die Gangwechselsteuerung (7, 107, 207, 307) dazu konfiguriert ist:
die Gangstufen des Mehrstufen-Automatikgetriebes (12, 312) von der ersten Gangstufe zu der zweiten Gangstufe hochzuschalten, falls das Neigungsfahrzeug (1) eine Kurve fährt in einem Neigungszustand, in dem sich das Neigungsfahrzeug (1) in Bezug auf eine vertikale Linie einer Straßenoberfläche in einer Linksrichtung oder in einer Rechtsrichtung um eine sich in einer Vorne-Hinten-Richtung des Neigungsfahrzeugs als Mitte drehende Drehachse neigt, wenn die Fahrzeuggeschwindigkeit zu einem Zeitpunkt, wenn der Wert bezüglich des Beschleunigeröffnungsgrades ein vorbestimmter Wert ist, eine zweite Fahrzeuggeschwindigkeitsschwelle überschreitet, die größer ist als eine erste Fahrzeuggeschwindigkeitsschwelle, bei der die Gangstufen des Mehrstufen-Automatikgetriebes (12, 312) von einer ersten Gangstufe zu einer zweiten Gangstufe bei einer aufrechten Bewegung des Neigungsfahrzeugs (1) hochgeschaltet werden, oder
die Getriebestufen des Mehrstufen-Automatikgetriebes (12, 312) von der ersten Gangstufe zu der zweiten Gangstufe hochzuschalten, falls das Neigungsfahrzeug (1) eine Kurve fährt in dem zuvor genannten Neigungszustand, wenn der Wert bezüglich des Beschleunigeröffnungsgrades zu einem Zeitpunkt, wenn die Fahrzeuggeschwindigkeit eine vorbestimmte Fahrzeuggeschwindigkeit ist, eine zweite Beschleunigeröffnungsgrad-bezogene Schwelle überschreitet, die kleiner ist als eine erste Beschleunigeröffnungsgrad-bezogene Schwelle, bei der die Gangstufen des Mehrstufen-Automatikgetriebes (12, 312) von der ersten Gangstufe zu der zweiten Gangstufe bei einer aufrechten Bewegung des Neigungsfahrzeugs (1) hochgeschaltet werden.

2. Das Neigungsfahrzeug (1) gemäß Anspruch 1,
bei dem, während das Neigungsfahrzeug (1) in dem Neigungszustand eine Kurve fährt, die Gangwechselsteuerung (7, 107, 207, 307) dazu konfiguriert ist, die erste Fahrzeuggeschwindigkeitsschwelle oder die erste Beschleunigeröffnungsgrad-bezogene Schwelle auf der Basis einer physischen Größe bezüglich eines Rollwiderstands der Räder (3, 4) zu ändern.

3. Das Neigungsfahrzeug (1) gemäß Anspruch 2,
bei dem die physische Größe bezüglich des Rollwiderstandes der Räder (3, 4) einen Neigungswinkel des Neigungsfahrzeugs (1) zwischen der vertikalen Linie der Straßenoberfläche und einer Oben-Unten-Richtung-Referenzlinie des Neigungsfahrzeugs und/oder eine Beschleunigung in einer Oben-Unten-Wellenrichtung des Fahrzeugkörpers (2) in einem Zustand, in dem das Neigungsfahrzeug (1) in dem Neigungszustand eine Kurve fährt, umfasst.

4. Das Neigungsfahrzeug (1) gemäß einem der Ansprüche 2 und 3,
bei dem, während das Neigungsfahrzeug (1) in dem Neigungszustand eine Kurve fährt, die Gangwechselsteuerung (7, 107, 207, 307) ein Aufwärtsschalten der Mehrzahl von Gangstufen verhindert, falls der Rollwiderstand der Räder (3, 4) größer ist als ein vorbestimmter Wert.

5. Das Neigungsfahrzeug (1) gemäß einem der Ansprüche 1 bis 4,
bei dem die Gangwechselsteuerung (7, 107, 207, 307):
Referenzdaten, die den Wert bezüglich des Beschleunigeröffnungsgrades und die Fahrzeuggeschwindigkeit umfassen, als Parameter umfasst, die verwendet werden zum Bestimmen eines Zeitpunktes des Aufwärtsschaltens von der ersten Gangstufe zu der zweiten Gangstufe in dem Mehrstufen-Automatikgetriebe (12, 312), wenn sich das Neigungsfahrzeug (1) in einem aufrechten Zustand bewegt, und
dazu konfiguriert ist, wenn das Neigungsfahrzeug (1) in dem Neigungszustand eine Kurve fährt, eine Änderung der Mehrzahl von Gangstufen in dem Mehrstufen-Automatikgetriebe (12, 312) bei einer Fahrzeuggeschwindigkeit auszuführen, die größer ist als die Fahrzeuggeschwindigkeit zu dem Zeitpunkt des Aufwärtsschaltens, der bestimmt wird auf der Basis der Referenzdaten, falls der Wert bezüglich des Beschleunigeröffnungsgrades ein vorbestimmter Wert ist, oder bei einem kleineren Wert als der Wert bezüglich des Beschleunigeröffnungsgrades zu dem Zeitpunkt des Aufwärtsschaltens, der bestimmt wird auf der Basis der Referenzdaten, falls die Fahrzeuggeschwindigkeit eine vorbestimmte Fahrzeuggeschwindigkeit ist.

## Revendications

1. Véhicule à inclinaison (1) qui est configuré pour s'incliner vers la gauche lors d'un virage à gauche et pour s'incliner vers la droite lors d'un virage à droite, le véhicule à inclinaison (1) comprenant:
une carrosserie de véhicule (2);
une pluralité de roues (3, 4) comportant une roue avant (3) et une roue arrière (4);
une source d'entraînement (11) configurée pour alimenter une force d'entraînement vers au moins l'une parmi la roue avant (3) ou la roue arrière (4);
un ajusteur de degré d'ouverture d'accélérateur (63) configuré pour ajuster la force d'entraînement générée dans la source d'entraînement (11) selon un degré d'ouverture d'accélérateur;
un détecteur de vitesse (62) configuré pour détecter la vitesse de véhicule du véhicule à inclinaison (1);
une transmission automatique à étages multiples de type à engrenages (12, 312) comportant une pluralité d'étages d'engrenage et un embrayage (40, 340, 360), et configurée pour modifier la force d'entraînement transférée à au moins l'une parmi la roue avant (3) ou la roue arrière (4) à partir de la source d'entraînement (11) en modifiant automatiquement par étape la pluralité d'étages d'engrenage; et
un moyen de commande de changement de vitesse (7, 107, 307, 407) configuré pour commander le changement de la pluralité d'étages d'engrenage dans la transmission automatique à étages multiples (12, 312) sur base d'une valeur relative au degré d'ouverture d'accélérateur et à la vitesse du véhicule,
dans lequel le moyen de commande de changement de vitesse (7, 107, 207, 307) est configuré pour
passer à un étage d'engrenage supérieur de la transmission automatique à étages multiples (12, 312), du premier étage d'engrenage au deuxième étage d'engrenage, au cas où le véhicule à inclinaison (1) vire dans un état incliné dans lequel le véhicule à inclinaison (1 ) s'incline par rapport à une ligne verticale d'une surface de route dans une direction à gauche ou dans une direction à droite autour d'un axe de rotation s'étendant dans une direction avant-arrière du véhicule à inclinaison comme centre lorsque la vitesse de véhicule, à un moment où la valeur relative au degré d'ouverture d'accélérateur est une valeur prédéterminée, excède un deuxième seuil de vitesse de véhicule qui est supérieur à un premier seuil de vitesse de véhicule auquel on passe à un étage d'engrenage supérieur de la transmission automatique à étages multiples (12, 312), d'un premier étage d'engrenage à un deuxième étage d'engrenage, lors du déplacement en position verticale du véhicule à inclinaison (1), ou
passer à un étage d'engrenage supérieur de la transmission automatique à étages multiples (12, 312), du premier étage d'engrenage au deuxième étage d'engrenage, au cas où le véhicule à inclinaison (1) vire dans l'état incliné mentionné ci-dessus lorsque la valeur relative au degré d'ouverture d'accélérateur, à un moment où la vitesse de véhicule est une vitesse de véhicule prédéterminée, excède un deuxième seuil relatif au degré d'ouverture d'accélérateur qui est inférieur à un premier seuil relatif au degré d'ouverture d'accélérateur auquel on passe à un étage d'engrenage supérieur de la transmission automatique à étages multiples (12, 312), du premier étage d'engrenage au deuxième étage d'engrenage, lors du déplacement en position verticale du véhicule à inclinaison (1).

2. Véhicule à inclinaison (1) selon la revendication 1,
dans lequel, tandis que le véhicule à inclinaison (1) vire dans l'état incliné, le moyen de commande de changement de vitesse (7, 107, 207, 307) est configuré pour modifier le premier seuil de vitesse de véhicule ou le premier seuil relatif au degré d'ouverture d'accélérateur sur base d'une grandeur physique relative à une résistance au roulement des roues (3, 4).

3. Véhicule à inclinaison (1) selon la revendication 2,
dans lequel la quantité physique relative à la résistance au roulement des roues (3, 4) comporte au moins l'un parmi un angle d'inclinaison du véhicule à inclinaison (1) entre la ligne verticale de la surface de route et une ligne de référence de la direction vers le haut/le bas du véhicule à inclinaison ou une accélération dans une direction d'arbre vers le haut/le bas du corps de véhicule (2) dans un état où le véhicule à inclinaison (1) vire dans l'état incliné.

4. Véhicule à inclinaison (1) selon l'une quelconque des revendications 2 et 3,
dans lequel, tandis que le véhicule à inclinaison (1) vire dans l'état incliné, si la résistance au roulement des roues (3, 4) est supérieure à une valeur prédéterminée, le moyen de commande de changement de vitesse (7, 107, 207, 307) empêche un passage à un étage supérieur de la pluralité d'étages d'engrenage.

5. Véhicule à inclinaison (1) selon l'une quelconque des revendications 1 à 4,
dans lequel le moyen de commande de changement de vitesse (7, 107, 207, 307)
comporte les données de référence comportant la valeur relative au degré d'ouverture de l'accélérateur et à la vitesse de véhicule comme paramètres utilisés pour déterminer un moment de passage du premier étage d'engrenage au deuxième étage d'engrenage dans la transmission automatique à étages multiples (12, 312) lorsque le véhicule à inclinaison (1) se déplace dans un état vertical, et
est configuré pour effectuer, lorsque le véhicule à inclinaison (1) vire dans l'état incliné, le changement de la pluralité d'étages d'engrenage dans la transmission automatique à étages multiples (12, 312) à une vitesse de véhicule qui est supérieure à la vitesse de véhicule au moment du passage à l'étage supérieur déterminé sur base des données de référence si la valeur relative au degré d'ouverture d'accélérateur est une valeur prédéterminée, ou à une valeur inférieure à la valeur relative au degré d'ouverture d'accélérateur au moment du passage à l'étage supérieur déterminé sur base des données de référence si la vitesse de véhicule est une vitesse de véhicule prédéterminée.
